# EUROPEAN PATENT SPECIFICATION

(11) **EP 4 184 023 B1**
(45) Date of publication and mention of the grant of the patent: **02.07.2025**
(21) Application number: 22826584.9
(22) Date of filing: 19.05.2022
(51) Int. Cl.: F16C 11/00, H04M 1/02, G06F 1/16, E05D 1/04

(54) **ROTATION MECHANISM AND FOLDABLE TERMINAL**
ROTATIONSMECHANISMUS UND KLAPPBARES ENDGERÄT
MÉCANISME DE ROTATION ET TERMINAL PLIABLE

(30) Priority: 20.08.2021 CN 202110961388
(43) Date of publication of application: 24.05.2023
(73) Proprietor: Honor Device Co., Ltd., Shenzhen, Guangdong 518040 (CN)
(72) Inventor: FENG, Lei, Shenzhen, Guangdong 518040 (CN); WEI, Yameng, Shenzhen, Guangdong 518040 (CN); ZHANG, Wei, Shenzhen, Guangdong 518040 (CN); YUAN, Leibo, Shenzhen, Guangdong 518040 (CN)
(74) Representative: Isarpatent
(86) International application number: PCT/CN2022/093920
(87) International publication number: WO 2023/020053

(56) References cited:
- WO-A1-2020/173269
- CN-A- 109 451 112
- CN-A- 111 614 806
- CN-A- 114 500 699
- CN-U- 210 867 803
- CN-U- 211 423 150
- US-A1- 2020 329 574
- US-A1- 2020 383 217

## Description

### TECHNICAL FIELD

This application relates to the field of foldable terminals, and in particular, to a rotation mechanism and a foldable terminal.

### BACKGROUND

With the development of science and technology, the era of a large-screen intelligent terminal is approaching, and a foldable terminal is favored by a user because of advantages such as a large screen and easy-to-carry. Currently, a foldable terminal usually implements folding and unfolding by using a rotation mechanism. However, to ensure rotation reliability of the rotation mechanism, a thickness of an existing rotation mechanism is often relatively large, which is not conducive to implementing a light and thin design of the foldable terminal.

US 2020/329574 A1 discloses a foldable electronic device which includes a housing including a first part and a second part, a flexible display seated on the first part and the second part, and a hinge structure configured to fold and unfold the first part and the second part of the housing.

WO 2020/173269 A1 discloses an electronic device, comprising a flexible screen and a housing.

### SUMMARY

This application provides a rotation mechanism and a foldable terminal, as defined in the appended set of claims. A thickness of the rotation mechanism is relatively small, which helps reduce a size of the foldable terminal, and implements a light and thin design of the foldable terminal.

According to a first aspect, this application provides a rotation mechanism, including a fixed base, a first swing arm, a second swing arm, a first limiting member, and a second limiting member. A first sliding groove and a second sliding groove are disposed on the fixed base. Both openings of the first sliding groove and the second sliding groove are located on a top surface of the fixed base. Both the first sliding groove and the second sliding groove are recessed from a top-bottom direction of the fixed base. For example, both the first sliding groove and the second sliding groove are circular arc grooves.

The first swing arm includes a first rotation shaft part, and the first rotation shaft part is installed in the first sliding groove, and may rotate relative to the fixed base. The first rotation shaft part is located at one end of the first swing arm. The first rotation shaft part is an arc-shaped plate, and is adapted to the first sliding groove. The first rotation shaft part projects in a direction facing away from the top surface of the first swing part. The first rotation shaft part is provided with a first sliding hole, and the first sliding hole runs through the first rotation shaft part in a thickness direction of the first rotation shaft part. The first sliding hole is a circular arc hole.

The second swing arm includes a second rotation shaft part, and the second rotation shaft part is installed in the second sliding groove, and may rotate relative to the fixed base. The second rotation shaft part is located at one end of the second swing arm. The second rotation shaft part is an arc-shaped plate, and is adapted to the second sliding groove. The second rotation shaft part projects in a direction facing away from the top surface of the second swing part. The second rotation shaft part is provided with a second sliding hole, and the second sliding hole runs through the second rotation shaft part in a thickness direction of the second rotation shaft part. The second sliding hole is a circular arc hole.

Rotation directions of the first rotation shaft part and the second rotation shaft part are opposite relative to the fixed base.

For example, the first rotation shaft part rotates in a counterclockwise direction relative to the fixed base, and the second rotation shaft part rotates in a clockwise direction relative to the fixed base. In this case, the first swing arm and the second swing arm rotate relative to the fixed base to fold relatively. Alternatively, the first rotation shaft part rotates in a clockwise direction relative to the fixed base, and the second rotation shaft part rotates in a counterclockwise direction relative to the fixed base. In this case, the first swing arm and the second swing arm rotate relative to the fixed base to unfold relatively.

The first limiting member is disposed in the first sliding hole, and is fixedly connected to the fixed base. When the first rotation shaft part rotates relative to the fixed base, the first limiting member slides relative to the first rotation shaft part along the first sliding hole.

When the first rotation shaft part rotates relative to the fixed base, the first rotation shaft part slides relative to the first limiting member along the first sliding hole, so that the first limiting member slides relative to the first rotation shaft part along the first sliding hole.

The second limiting member is disposed in the second sliding hole, and is fixedly connected to the fixed base. When the second rotation shaft part rotates relative to the fixed base, the second limiting member slides relative to the second rotation shaft part along the second sliding hole.

When the second rotation shaft part rotates relative to the fixed base, the second rotation shaft part slides along the second sliding hole relative to the second limiting member, so as to implement sliding of the second limiting member along the second sliding hole relative to the second rotation shaft part.

For ease of description, when the rotation mechanism is in a flattened state, it is defined that a width direction of the rotation mechanism is an X-axis direction, a length direction of the rotation mechanism is a Y-axis direction, a thickness direction of the rotation mechanism is a Z-axis direction, and the X-axis direction, the Y-axis direction, and the Z-axis direction are perpendicular to each other.

In the rotation mechanism shown in this application, rotation of the rotation mechanism can be implemented only by using the fixed base, the first swing arm, and the second swing arm. A structure of the rotation mechanism shown in this application is simple, which helps reduce costs of the rotation mechanism. In addition, compared with an existing rotation mechanism, the first swing arm and the second swing arm respectively slide with the first sliding groove and the second sliding groove of the fixed base, that is, a single-layer sliding groove may be used to implement rotation of the rotation mechanism, which is conducive to reducing a thickness of the fixed base, the first swing arm, and the second swing arm. The rotation mechanism shown in this application may reduce at least one layer of a thickness (about 0.6 mm) of a structural member, which is conducive to implementing a light and thin design of the rotation mechanism.

In addition, a rotation track of each of the first swing arm and the second swing arm relative to the fixed base may be limited by cooperation between the first limiting member and the second limiting member and the fixed base, so as to prevent misalignment between the first swing arm and the second swing arm and the fixed base in the Y-axis direction and the Z-axis direction, thereby improving rotation stability of the rotation mechanism.

In an implementation, the fixed base is provided with a first fixing hole and a second fixing hole, an opening of the first fixing hole is located on a groove bottom wall of the first sliding groove, and an opening of the second fixing hole is located on a groove bottom wall of the second sliding groove.

The first limiting member includes a first fixing part, a first sliding part, and a first limiting member that are connected in sequence, where the first fixing part is in the first fixing hole, and is fixed to a hole wall of the first fixing hole, so as to implement fastening connection between the first limiting member and the fixed base. The first sliding part is located in the first sliding hole. A top surface of the first limiting member is exposed relative to the first rotation shaft part. A bottom surface of the first limit part is clamped on a top surface of the first rotation shaft part, so as to limit the first rotation shaft part in a Z-axis direction, so that no misalignment occurs between the first swing arm and the fixed base in a Z-axis direction, which helps improve assembly stability between the first swing arm and the fixed base.

When the first rotation shaft part rotates relative to the fixed base, the first sliding part slides relative to the first rotation shaft part in the first sliding hole, so as to limit the first rotation shaft part in the Y-axis direction, so that no misalignment occurs between the first swing arm and the fixed base in the Y-axis direction, thereby limiting a rotation track of the first rotation shaft part relative to the fixed base.

The second limiting member includes a second fixing part, a second sliding part, and a second limiting member that are connected in sequence, where the second fixing part is in the second fixing hole, and is fixed to a hole wall of the second fixing hole, so as to implement fastening connection between the second limiting member and the fixed base. The second sliding part is located in the second sliding hole. A top surface of the second limiting member is exposed relative to the second rotation shaft part. A bottom surface of the second limiting member is clamped on a top surface of the second rotation shaft part, so as to limit the second rotation shaft part in a Z-axis direction, so that no misalignment occurs between the second swing arm and the fixed base in a Z-axis direction, which helps improve assembly stability between the second swing arm and the fixed base.

When the second rotation shaft part rotates relative to the fixed base, the second sliding part slides relative to the second rotation shaft part in the second sliding hole, so as to limit the second rotation shaft part in the Y-axis direction, so that no misalignment occurs between the second swing arm and the fixed base in the Y-axis direction, thereby limiting a rotation track of the second rotation shaft part relative to the fixed base.

In an implementation, the rotation mechanism further includes a drive member, and the drive member is connected between the first swing arm and the second swing arm, so that when the first swing arm rotates relative to the fixed base, the second swing arm rotates relative to the fixed base, or when the second swing arm rotates relative to the fixed base, the first swing arm rotates relative to the fixed base, so as to implement synchronous rotation between the first swing arm and the second swing arm relative to the fixed base. For example, the drive member may be a gear or another part that can implement rotation.

In an implementation, the first swing arm further includes a first swing part, and the first swing part is fixedly connected to the first rotation shaft part, and projects relative to the first sliding groove. When the first swing part rotates relative to the fixed base, the first rotation shaft part rotates relative to the fixed base in the first sliding groove, so as to implement rotation of the first swing arm relative to the fixed base. The first swing part is fixedly connected to one end of the first rotation shaft part. The first rotation shaft part projects in a direction facing away from the top surface of the first swing part.

A top surface of the first limiting member is located between the top surface of the first swing part and the top surface of the first rotation shaft part. That is, the top surface of the first limiting member does not protrude relative to the top surface of the first swing part, so that the first limiting member reuses space in the Z-axis direction with the first rotation shaft part and the fixed base, so as to reduce the size of the rotation mechanism in the Z-axis direction, which helps to implement a light and thin design of the rotation mechanism.

The second swing arm further includes a second swing part, where the second swing part is fixedly connected to the second rotation shaft part, and projects relative to the second sliding groove. When the second swing part rotates relative to the fixed base, the second rotation shaft part rotates relative to the fixed base in the second sliding groove, so as to implement rotation of the second swing arm relative to the fixed base. The second swing part is fixedly connected to one end of the second rotation shaft part. The first rotation shaft part projects in a direction facing away from the top surface of the second swing part.

A top surface of the second limiting member is located between the top surface of the second swing part and the top surface of the second rotation shaft part. That is, the top surface of the second limiting member does not protrude relative to the top surface of the second swing part, so that the second limiting member reuses space in the Z-axis direction with the second rotation shaft part and the fixed base, so as to reduce the size of the rotation mechanism in the Z-axis direction, which helps to implement a light and thin design of the rotation mechanism.

In an implementation, the rotation mechanism further includes a first support plate and a second support plate. The first support plate is fixedly connected to the first swing part. The first support plate is fixedly connected to the top surface of the first swing part. When the first swing part rotates relative to the fixed base, the first support plate rotates relative to the fixed base. The second support plate is fixedly connected to the second swing part. The second support plate is fixedly connected to the top surface of the second swing part. When the second swing part rotates relative to the fixed base, the second support plate rotates relative to the fixed base.

When the rotation mechanism is in an unfolded state, the first support plate and the second support plate are relatively unfolded. When the rotation mechanism is in a folded state, the first support plate and the second support plate are relatively folded.

In an implementation, when the rotation mechanism is in a flattened state, the top surface of the first support plate and the top surface of the second support plate form a support surface, which is used to support a foldable part of a display screen, so as to ensure good display of the display screen.

In an implementation, when the rotation mechanism is in a folded state, the first support plate, the second support plate, and the fixed base are surrounded to form an avoidance space, so as to avoid a foldable part of the display screen, prevent a large angle bending of the display screen, so as to avoid a poor phenomenon such as a crease of the display screen, and help to prolong service life of the display screen.

In an implementation, the first support plate is provided with a first avoidance hole, and the first avoidance hole runs through the first support plate in a thickness direction of the first support plate and is configured to avoid the first limiting member, so as to avoid interference between the first support plate and the first limiting member when the first support plate rotates relative to the fixed base, thereby ensuring rotation fluency of the rotation mechanism.

A projection of the first avoidance hole on the first swing arm covers the first sliding hole, and covers a projection of the first limiting member on the first swing arm.

It should be noted that the projections described in this application are all positive projections. The following description of the projection may be the same.

A second avoidance hole is disposed on the second support plate, and the second avoidance hole runs through the second support plate in a thickness direction of the second support plate and is configured to avoid the second limiting member, so as to avoid interference between the second support plate and the second limiting member when the second support plate rotates relative to the fixed base, thereby ensuring rotation fluency of the rotation mechanism.

A projection of the first avoidance hole on the first swing arm covers the second sliding hole, and covers a projection of the second limiting member on the first swing arm.

In an implementation, when the rotation mechanism is in a flattened state, the first rotation shaft part and the second rotation shaft part are arranged in the X-axis direction. In the X-axis direction, the first rotation shaft part and the second rotation shaft part are partially arranged or fully arranged in an overlapping manner, so that the size of the rotation mechanism in the X-axis direction can be reduced, and a miniaturization design of the rotation mechanism can be implemented.

In another implementation, when the rotation mechanism is in a flattened state, the first rotation shaft part and the second rotation shaft part are arranged in the X-axis direction at intervals.

In an implementation, the first rotation shaft part and the second rotation shaft part are arranged in an overlapping manner in the Y-axis direction. In the Y-axis direction, the first rotation shaft part and the second rotation shaft part are partially arranged or fully arranged in an overlapping manner, so that the size of the rotation mechanism in the Y-axis direction can be reduced, and a miniaturization design of the rotation mechanism can be implemented.

In another implementation, the first rotation shaft part and the second rotation shaft part are arranged at intervals in the Y-axis direction.

In an implementation, the first support plate is provided with a first protrusion and a first notch. The first protrusion is connected to a surface of the first support plate facing the second support plate. The first protrusion extends from the surface of the first support plate facing the second support plate towards a direction of the second support plate. A projection of the first protrusion on the first swing arm is located in the first rotation shaft part. An opening of the first notch is located on the surface of the first support plate facing the second support plate. The first notch is recessed from the surface of the first support plate facing the second support plate towards a direction facing away from the second support plate. A projection of the first notch on the second swing arm is located in the second rotation shaft part.

A second protrusion and a second notch are disposed on the second support plate. The second protrusion is connected to a surface of the second support plate facing the first support plate. The second protrusion extends from the surface of the second support plate facing the first support plate towards a direction of the first support plate. The projection of the second protrusion on the second swing arm is located in the second rotation shaft part. The second protrusion is adapted to the first notch.

An opening of the second notch is located on the surface of the second support plate facing the first support plate. The second notch is recessed from the surface of the second support plate facing the first support plate in a direction facing away from the first support plate. The projection of the second notch on the first swing arm is located in the first rotation shaft part. The second notch is adapted to the first protrusion.

When the rotation mechanism is in a flattened state, the first protrusion is engaged with the second notch, and the second protrusion is engaged with the first notch, so as to avoid interference between the first support plate and the second support plate and the fixed base when the first support plate and the second support plate rotate relative to the fixed base, thereby ensuring rotation fluency of the rotation mechanism. It should be noted that engagement between the protrusion and the notch means that the protrusion is located in the notch, and a circumferential surface of the protrusion abuts against a groove side wall of the notch.

In an implementation, the first avoidance hole may further run through the surface of the first protrusion toward the second support plate, and the second avoidance hole may further run through the surface of the second protrusion toward the first support plate.

In an implementation, the rotation mechanism further includes a first auxiliary member and a second auxiliary member. The first auxiliary member is located on a side of the first rotation shaft part that faces away from a groove bottom wall of the first sliding groove. That is, the first rotation shaft part is located between the first auxiliary member and the groove bottom wall of the first sliding groove. The first auxiliary member is fixedly connected to the fixed base. For example, the first auxiliary member is fixedly connected to a groove side wall of the first sliding groove. The first auxiliary member is provided with a first limiting hole connected to the first sliding groove. The first limiting member is further disposed in the first limiting hole. For example, the first limiting member may be fixedly connected to the first auxiliary member. The first limiting member may be fixedly connected to a hole wall of the first limiting hole.

The second auxiliary member is located on a side of the second rotation shaft part that faces away from the groove bottom wall of the second sliding groove. That is, the second rotation shaft part is located between the second auxiliary member and the groove bottom wall of the second sliding groove. The second auxiliary member is fixedly connected to the fixed base. For example, the second auxiliary member is fixedly connected to the groove side wall of the second sliding groove. The second auxiliary member is provided with a second limiting hole connected to the second sliding groove, and the second limiting member is further disposed in the second mounting hole. For example, the second limiting member may be fixedly connected to the second auxiliary member. The second limiting member may be fixedly connected to a hole wall of the second limiting hole.

In this implementation, by adding the first auxiliary member and the second auxiliary member, a contact area between the first limiting member and the second limiting member and the remaining parts of the rotation mechanism is increased, and a limiting effect of the first limiting member and the second limiting member is improved, thereby improving assembly stability between the parts of the rotation mechanism.

In an implementation, the fixed base, the first auxiliary body, and the second auxiliary body may be formed integrally.

In an implementation, a top surface of the first auxiliary member is located between the top surface of the first swing part and the top surface of the first rotation shaft part. That is, the top surface of the first auxiliary member does not protrude relative to the top surface of the first swing part, so that the first auxiliary member reuses space between the fixed base and the first swing arm in the Z-axis direction, which can reduce the size of the rotation mechanism in the Z-axis direction, thereby helping to implement a light and thin design of the rotation mechanism.

A top surface of the second auxiliary member is located between the top surface of the second swing part and the top surface of the second rotation shaft part. That is, the top surface of the second auxiliary member does not protrude relative to the top surface of the second swing part, so that the second auxiliary member reuses space between the fixed base and the second swing arm in the Z-axis direction, which can reduce the size of the rotation mechanism in the Z-axis direction, which helps to implement a light and thin design of the rotation mechanism.

In an implementation, the rotation mechanism includes two rotation components, the two rotation components are arranged at intervals in a Y-axis direction, and each of the rotation components includes the fixed base, the first swing arm, the second swing arm, the first limiting member, and the second limiting member.

In an implementation, the rotation mechanism has a symmetrical surface, and the two rotation components are symmetrical with respect to a symmetrical surface image.

In an implementation, the rotation component has a central axis, and the rotation component is symmetrical with respect to the central axis.

According to a second aspect, this application provides a foldable terminal, including a first housing, a second housing, and any one of the foregoing rotation mechanisms. The first housing is fixedly connected to a first swing arm. The first housing is fixedly connected to the first swing part. The second housing is fixedly connected to a second swing arm. The second housing is fixedly connected to the second swing part.

When the foldable terminal is in an unfolded state, the first housing and the second housing are relatively unfolded, and the rotation mechanism is in the unfolded state. When the foldable terminal is in a folded state, the first housing and the second housing are relatively folded, and the rotation mechanism is in a folded state.

When the first housing and the second housing are relatively folded or unfolded, the first housing drives the first swing arm to rotate relative to the fixed base, and the second housing drives the second swing arm to rotate relative to the fixed base.

The foldable terminal shown in this application uses the foregoing rotation mechanism. A relatively small thickness of the foregoing rotation mechanism helps reduce a size of the foldable terminal, thereby implementing a light and thin design of the foldable terminal.

In an implementation, the foldable terminal further includes a display screen, the display screen includes a first display part, a second display part, and a foldable part, the foldable part is connected between the first display part and the second display part, the first display part is installed in the first housing, the second display part is installed in the second housing, and the foldable part is disposed opposite to the rotation mechanism.

When the foldable terminal is in the folded state, a foldable part that is bent is located in the avoidance space formed by enclosing the first support plate, the second support plate, and the fixed base, so that the foldable part does not bend at a relatively large angle, thereby avoiding a poor phenomenon such as a crease in the display screen, and prolonging service life of the display screen.

### BRIEF DESCRIPTION OF DRAWINGS

To describe the technical solutions in the embodiments of this application or the background more clearly, the following describes the accompanying drawings required in the embodiments of this application or the background.
FIG. 1 is a schematic structural diagram of a foldable terminal in a first state according to an embodiment of this application;
FIG. 2 is a schematic structural diagram of the foldable terminal shown in FIG. 1 in a second state;
FIG. 3 is a schematic structural diagram of the foldable terminal shown in FIG. 1 in a third state;
FIG. 4 is a schematic diagram of an exploded structure of the foldable terminal shown in FIG. 3;
FIG. 5 is a schematic structural diagram of a first housing and a second housing of a foldable apparatus in the foldable terminal shown in FIG. 4;
FIG. 6 is a schematic structural diagram of a rotation mechanism of a foldable apparatus in the foldable terminal shown in FIG. 4;
FIG. 7 is a schematic diagram of an exploded structure of the rotation mechanism shown in FIG. 6;
FIG. 8 is a schematic structural diagram of a rotation component in the rotation mechanism shown in FIG. 7;
FIG. 9 is a schematic diagram of an exploded structure of the rotation component shown in FIG. 8;
FIG. 10 is a schematic structural diagram of a fixed base in the rotation component shown in FIG. 9;
FIG. 11 is a schematic structural diagram of a first swing arm and a second swing arm in the rotation component shown in FIG. 9;
FIG. 12 is a schematic cross-sectional structural diagram of the rotation component shown in FIG. 8 cut along A-A;
FIG. 13 is a schematic structural diagram of a first support plate in the rotation component shown in FIG. 6;
FIG. 14 is a schematic structural diagram of a second support plate in the rotation component shown in FIG. 6;
FIG. 15 is a schematic diagram of a cross-sectional structure of the rotation mechanism shown in FIG. 6 cut along B-B;
FIG. 16 is a schematic structural diagram of the rotation mechanism shown in FIG. 6 in a second state;
FIG. 17 is a schematic structural diagram of the rotation mechanism shown in FIG. 6 in a third state;
FIG. 18 is a schematic diagram of a plane structure of the rotation mechanism shown in FIG. 6;
FIG. 19 is a schematic structural diagram of partial decomposition of a foldable apparatus in the foldable terminal shown in FIG. 4;
FIG. 20 is a schematic diagram of a local structure of the foldable terminal shown in FIG. 1;
FIG. 21 is a schematic structural diagram of a rotation component of a rotation mechanism in a second foldable terminal according to an embodiment of this application;
FIG. 22 is a schematic structural diagram of a fixed base in the rotation component shown in FIG. 21; and
FIG. 23 is a schematic cross-sectional structural diagram of the rotation component shown in FIG. 21 cut along D-D.

### DESCRIPTION OF EMBODIMENTS

The following describes the embodiments of this application with reference to the accompanying drawings in the embodiments of this application.

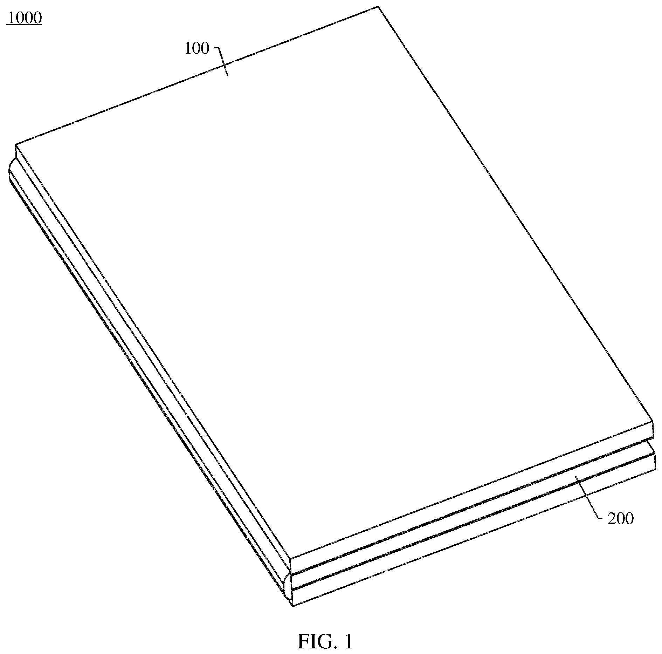

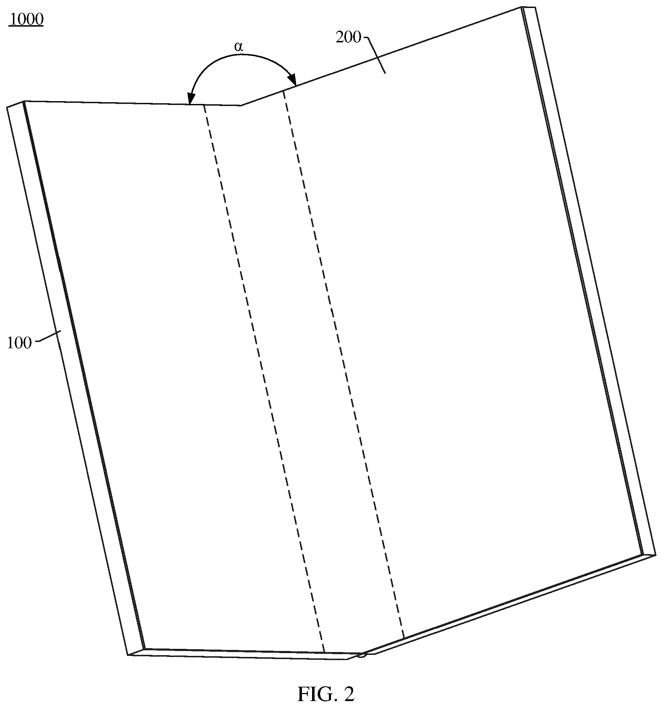

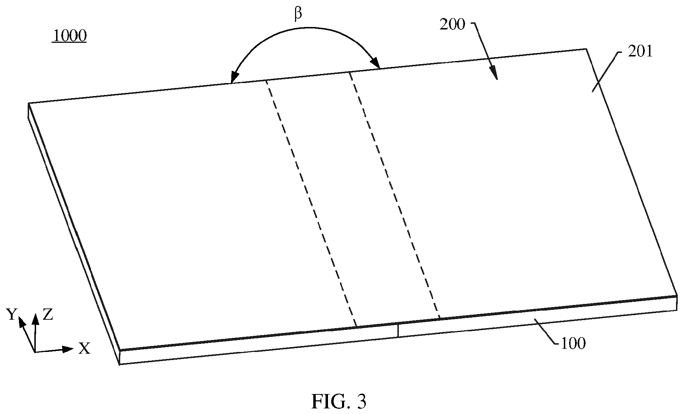

Referring to FIG. 1 to FIG. 3, FIG. 1 is a schematic structural diagram of a foldable terminal 1000 in a first state according to an embodiment of this application. FIG. 2 is a schematic structural diagram of the foldable terminal 1000 shown in FIG. 1 in a second state. FIG. 3 is a schematic structural diagram of the foldable terminal 1000 shown in FIG. 1 in a third state.

For ease of description, a width direction of the foldable terminal 1000 shown in FIG. 3 is defined as an X-axis direction, a length direction of the foldable terminal 1000 is a Y-axis direction, a thickness direction of the foldable terminal 1000 is a Z-axis direction, and the X-axis direction, the Y-axis direction, and the Z-axis direction are perpendicular to each other.

The foldable terminal 1000 may be a foldable electronic product such as a mobile phone, a tablet computer, a personal computer, a multimedia player, an e-book reader, a notebook computer, a vehicle-mounted device, or a wearable device. In this embodiment, the foldable terminal 1000 is a foldable mobile phone. That is, the foldable terminal 1000 is a mobile phone that can be switched between a folded state and an unfolded state. In this embodiment of this application, that the foldable terminal 1000 may be folded or unfolded in the X-axis direction is used as an example for description.

The foldable terminal 1000 shown in FIG. 1 is in a folded state, and both the foldable terminals 1000 shown in FIG. 2 and FIG. 3 are in an unfolded state. For example, an unfolding angle α of the foldable terminal 1000 shown in FIG. 2 is 90 degrees, and an unfolding angle β of the foldable terminal 1000 shown in FIG. 3 is 180 degrees. That is, the foldable terminal 1000 shown in FIG. 3 is in a flattened state.

It should be noted that a slight deviation is allowed for all angles described by using an example in this embodiment of this application. For example, that the unfolding degree α of the foldable terminal 1000 shown in FIG. 2 is 90 degrees means that the unfolding angle α may be 90 degrees, or may be approximately 90 degrees, for example, 80 degrees, 85 degrees, 95 degrees, or 100 degrees. For another example, that the unfolding angle β of the foldable terminal 1000 shown in FIG. 3 is 180 degrees means that β may be 180 degrees, or may be approximately 180 degrees, for example, 170 degrees, 175 degrees, 185 degrees, and 190 degrees. An example for description in the following may be used for same understanding.

It should be understood that the foldable terminal 1000 shown in this embodiment of this application is a foldable terminal. In some other embodiments, the foldable terminal 1000 may also be a terminal that may be folded for a plurality of times (more than twice). In this case, the foldable terminal 1000 may include a plurality of parts, two adjacent parts may be folded relatively close to the foldable terminal 1000 in a foldable state, and two adjacent parts may be unfolded relatively far from the foldable terminal 1000 in an unfolded state.

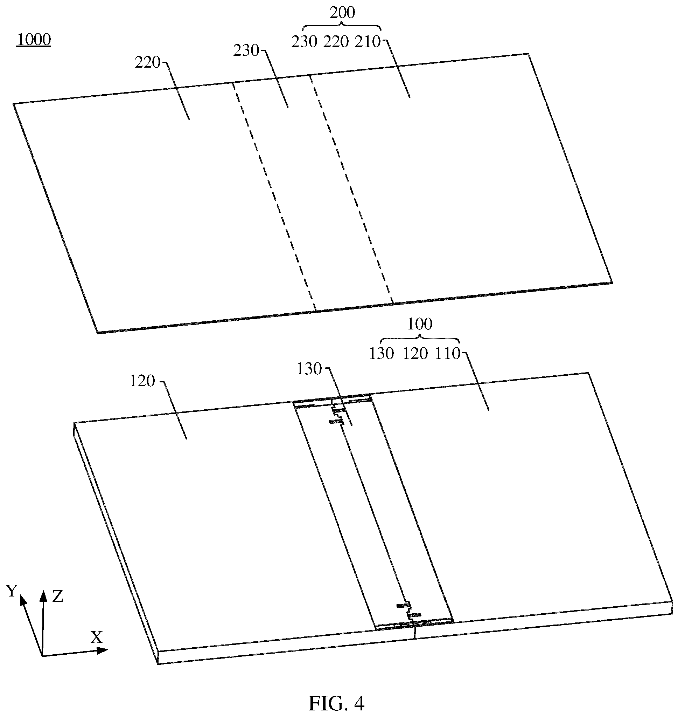

FIG. 4 is a schematic diagram of an exploded structure of the foldable terminal 1000 shown in FIG. 3.

The foldable terminal 1000 includes a foldable apparatus 100 and a display screen 200, and the display screen 200 is installed in the foldable apparatus 100. The display screen 200 includes a display surface 201 that deviates from the foldable apparatus 100, and the display surface 201 is configured to display information such as a text, an image, or a video. In this embodiment, the display screen 200 includes a first display part 210, a second display part 220, and a foldable part 230, and the foldable part 230 is connected between the first display part 210 and the second display part 220. The foldable part 230 may be bent in an X-axis direction.

As shown in FIG. 1, when the foldable terminal 1000 is in a folded state, the first display part 210 and the second display part 220 are disposed opposite to each other, and the foldable part 230 is bent. In this case, the display screen 200 is in a folded state, and an exposed area of the display screen 200 is relatively small, thereby greatly reducing a probability that the display screen 200 is damaged, and effectively protecting the display screen 200. As shown in FIG. 2, the foldable terminal 1000 is in an unfolded state, the first display part 210 and the second display part 220 are relatively unfolded, and the foldable part 230 is bent. In this case, an angle between the first display part 210 and the second display part 220 is α. As shown in FIG. 3, the foldable terminal 1000 is in an unfolded state, the first display part 210 and the second display part 220 are relatively unfolded, and the foldable part 230 is not bent and flattened. In this case, angles between the first display part 210, the second display part 220, and the foldable part 230 are all β, and the display screen 200 has a large display area, so as to implement large-screen display of the foldable terminal 1000 and improve user experience.

In this embodiment, the foldable apparatus 100 includes a first housing 110, a second housing 120, and a rotation mechanism 130. The rotation mechanism 130 is connected between the first housing 110 and the second housing 120, so as to implement rotational connection between the first housing 110 and the second housing 120. Specifically, the first housing 110 carries the first display part 210, and the second housing 120 carries the second display part 220. In other words, the first display part 210 is installed in the first housing 210, and the second display part 220 is installed in the second housing 120. The rotation mechanism 130 is disposed opposite to the foldable part 230.

The first housing 110 and the second housing 120 may rotate relative to each other by using the rotation mechanism 130, so that the foldable apparatus 100 switches between the folded state and the unfolded state. Specifically, the first housing 110 and the second housing 120 may rotate relative to each other, so that the foldable apparatus 100 is in a folded state, as shown in FIG. 1. The first housing 110 and the second housing 120 may also be rotated relative to each other, so that the foldable apparatus 100 is in an unfolded state, as shown in FIG. 2 and FIG. 3. For example, the foldable terminal 1000 shown in FIG. 2 is in an unfolded state, and an angle between the first housing 110 and the second housing 120 is α. The foldable terminal 1000 shown in FIG. 3 is in a flattened state, and an angle between the first housing 110 and the second housing 120 is β.

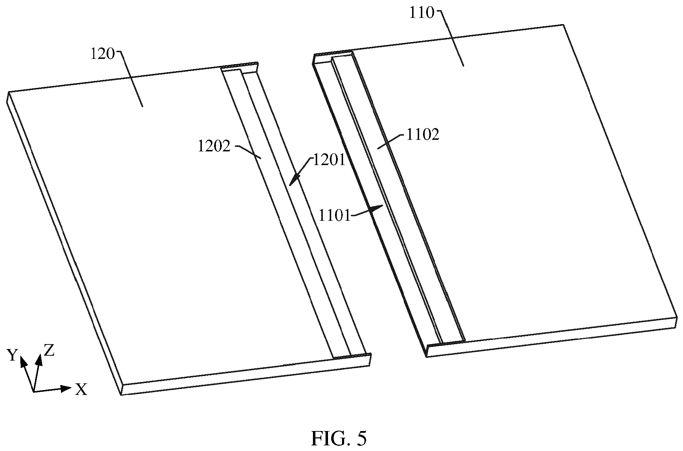

FIG. 5 is a schematic structural diagram of a first housing 110 and a second housing 120 of a foldable apparatus 100 in the foldable terminal 1000 shown in FIG. 4.

The first housing 110 is provided with a first receiving groove 1101, and the first receiving groove 1101 is located on a side of the first housing 110 facing the second housing 120. An opening of the first receiving groove 1101 is located on a top surface of the first housing 110. The first receiving groove 1101 is recessed from a top-bottom direction of the first housing 110, and runs through a side of the first housing 110 facing the second housing 120. A first step 1102 is disposed on a groove bottom wall of the first receiving groove 1101, and a step surface of the first step 1102 is located between the top surface of the first housing 110 and the groove bottom wall of the first receiving groove 1101.

The second housing 120 and the first housing 110 have a same structure and are mirror-symmetrical with respect to the rotation mechanism 130. The second housing 120 is provided with a second receiving groove 1201, and the second receiving groove 1201 is located on a side of the second housing 120 facing the first housing 110. An opening of the second receiving groove 1201 is located on a top surface of the second housing 120. The second receiving groove 1201 is recessed from a top-bottom direction of the second housing 120, and runs through a side of the second housing 120 facing the first housing 110. A second step 1202 is disposed on a groove bottom wall of the second receiving groove 1201, and a step surface of the second step 1202 is located between the top surface of the second housing 120 and the groove bottom wall of the second receiving groove 1201. As shown in FIG. 4, when the foldable apparatus 100 is in a flattened state, that is, when an angle between the first housing 110 and the second housing 120 is β, the first receiving groove 1101 and the second receiving groove 1201 are surrounded to form a receiving space (not marked in the figure), and the receiving space accommodates the rotation mechanism 130.

It should be noted that, in this embodiment of this application, orientation words such as "top", "bottom", "left", "right", "front", and "back" that are used when the foldable terminal 1000 is described are mainly described according to a display orientation of the foldable terminal 1000 in FIG. 3, where a positive direction toward the Z-axis is "top", a negative direction toward the Z-axis is "bottom", a negative direction toward the X-axis is "left", a positive direction toward the Y-axis is "back", and a negative direction toward the Y-axis is "front", which does not form a limitation on orientation of the foldable terminal 1000 in an actual application scenario.

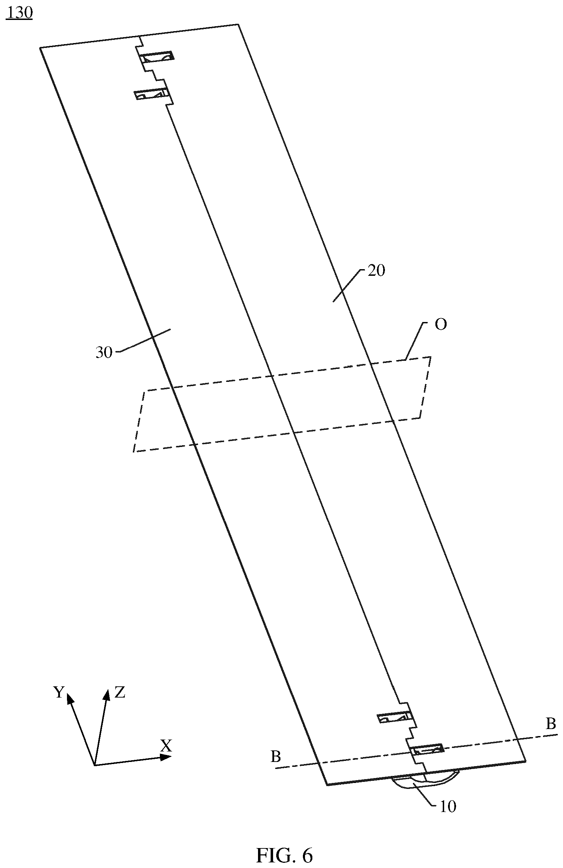

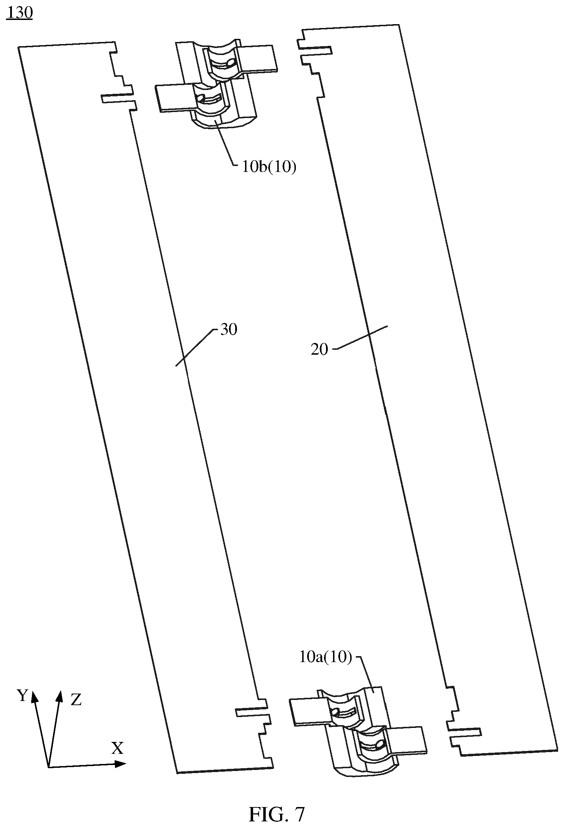

Referring to FIG. 6 and FIG. 7, FIG. 6 is a schematic structural diagram of a rotation mechanism 130 of a foldable apparatus 100 in the foldable terminal 1000 shown in FIG. 4, and FIG. 7 is a schematic diagram of an exploded structure of the rotation mechanism 130 shown in FIG. 6. A width direction of the rotation mechanism 130 shown in FIG. 6 is the X-axis direction, a length direction of the rotation mechanism 130 is the Y-axis direction, and a thickness direction of the rotation mechanism 130 is the Z-axis direction.

In this embodiment, the rotation mechanism 130 has a symmetric plane O, and the rotation mechanism 130 is mirror symmetric about the symmetric plane O. The rotation mechanism 130 includes a rotation component 10, a first support plate 20, and a second support plate 30. The rotation component 10 is connected between the first support plate 20 and the second support plate 30, so as to implement rotational connection between the first support plate 20 and the second support plate 30. That is, the first support plate 20 and the second support plate 30 are rotatably connected by using the rotation mechanism 130.

There are two rotation components 10, the two rotation components 10 are respectively a first rotation component 10a and a second rotation component 10b, and both the first rotation component 10a and the second rotation component 10b are connected between the first support plate 20 and the second support plate 30. The first rotation component 10a and the second rotation component 10b are arranged at intervals in the Y-axis direction. The first rotation component 10a is located on a side of the second rotation component 10b in a negative direction toward the Y-axis. In some other embodiments, there may be one or more rotation components 10. A quantity of rotation components 10 is not specifically limited in this embodiment of this application.

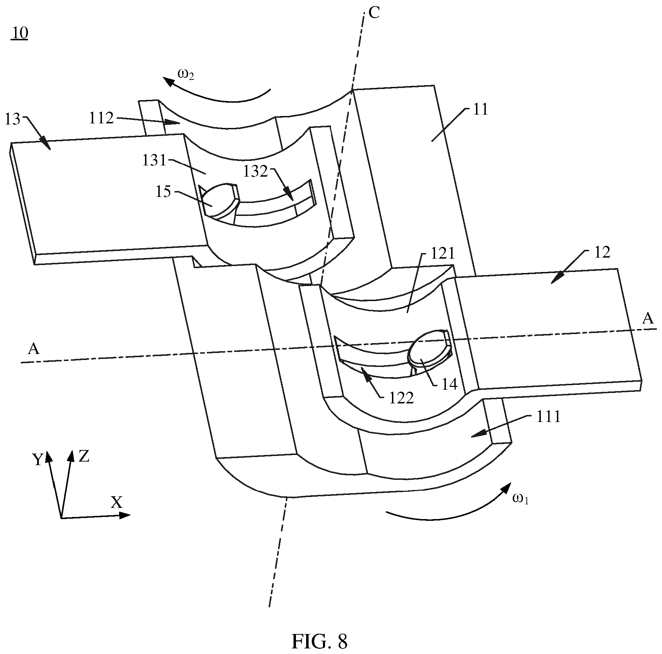

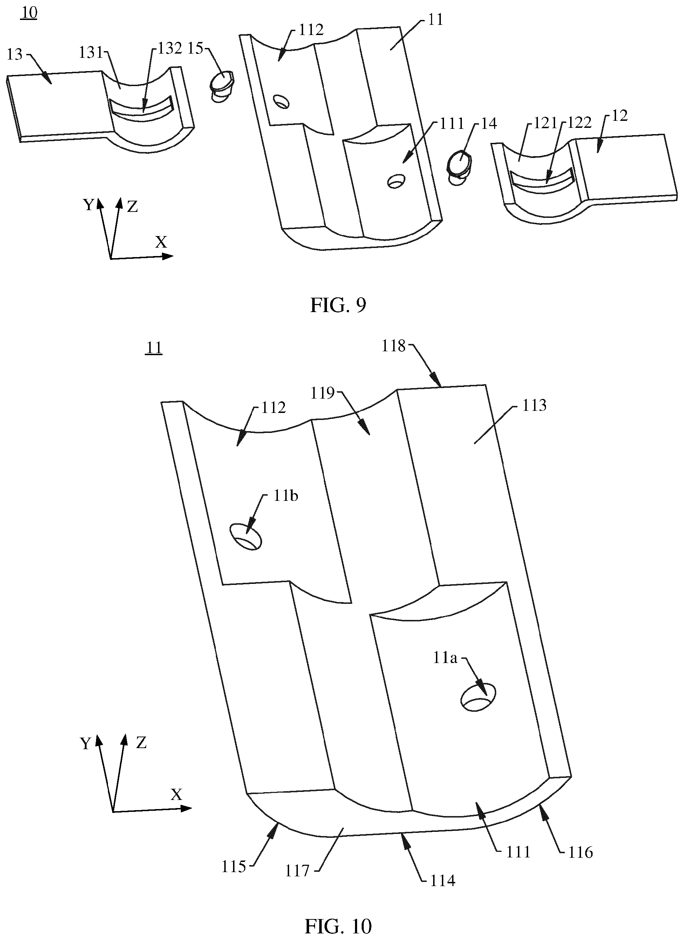

Referring to FIG. 8 and FIG. 9, FIG. 8 is a schematic structural diagram of a rotation component 10 in the rotation mechanism 130 shown in FIG. 7, and FIG. 9 is a schematic diagram of an exploded structure of the rotation component 10 shown in FIG. 8. It should be noted that the rotation component 10 shown in FIG. 8 is the first rotation component 10a shown in FIG. 7. In this embodiment of this application, the first rotation component 10a is used as an example to describe a structure of the rotation component 10.

In this embodiment, the rotation component 10 has a central axis C, and the rotation component 10 is symmetrical about the central axis C. The rotation component 10 includes a fixed base 11, a first swing arm 12, a second swing arm 13, a first limiting member 14, and a second limiting member 15. The fixed base 11 is provided with a first sliding groove 111 and a second sliding groove 112. The first swing arm 12 includes a first rotation shaft part 121, and the first rotation shaft part 121 is provided with a first sliding hole 122. The first rotation shaft part 121 is installed in the first sliding groove 111, and may rotate relative to the fixed base 11. The second swing arm 13 includes a second rotation shaft part 131, and the second rotation shaft part 131 is provided with a second sliding hole 132. The second rotation shaft part 131 is installed in the second sliding groove 112, and may rotate relative to the fixed base 11. The first limiting member 14 is disposed in the first sliding hole 122, and is fixedly connected to the fixed base 11. The second limiting member 15 is disposed in the second sliding hole 132, and is fixedly connected to the fixed base 11.

Rotation directions of the first rotation shaft part 121 and the second rotation shaft part 131 are opposite relative to the fixed base 11. For example, the first rotation shaft part 121 rotates in a counterclockwise direction (in a direction shown by ω1 in the figure) relative to the fixed base 11, and the second rotation shaft part 131 rotates in a clockwise direction (in a direction shown by ω2 in the figure) relative to the fixed base 11. In this case, the first swing arm 12 and the second swing arm 13 rotate relative to the fixed base 11 to fold relatively. Alternatively, the first rotation shaft part 121 rotates in a clockwise direction relative to the fixed base 11, and the second rotation shaft part 122 rotates in a counterclockwise direction relative to the fixed base 11. In this case, the first swing arm 12 and the second swing arm 13 rotate relative to the fixed base 11 to unfold relatively.

FIG. 10 is a schematic structural diagram of a fixed base 11 in the rotation component 10 shown in FIG. 9.

The fixed base 11 is symmetrical about the center axis C. The fixed base 11 includes a top surface 113, a bottom surface 114, a left side 115, a right side 116, a front side 117, and a rear side 118. The top surface 113 of the fixed base 11 is disposed opposite to the bottom surface 114. Both the left side 115 and the right side 116 of the fixed base 11 are connected between the top surface 113 and the bottom surface 114 of the fixed base 11. The front side 117 and the rear side 118 of the fixed base 11 are disposed opposite each other. For example, both the top surface 113 and the bottom surface 114 of the fixed base 11 are parallel to the X-Y plane, both the left side 115 and the right side 116 of the fixed base 11 are circular arcs, and both the front side 117 and the rear side 118 of the fixed base 11 are parallel to the X-Z plane.

The first sliding groove 111 and the second sliding groove 112 are symmetrical about the center axis C. Both openings of the first sliding groove 111 and the second sliding groove 112 are located on the top surface 113 of the fixed base 11. Both the first sliding groove 111 and the second sliding groove 112 are recessed from the top surface 113 to the bottom surface 114 of the fixed base 11. The first sliding groove 111 is close to the right side 116 of the fixed base 11, and further runs through the front side 117 of the fixed base 11. The second sliding groove 112 is close to the left side 115 of the fixed base 11, and further runs through the rear side 118 of the fixed base 11. Specifically, the first sliding groove 111 and the second sliding groove 112 are arranged at intervals in the X-axis direction. The first sliding groove 111 and the second sliding groove 112 are arranged at intervals in the Y-axis direction. For example, both the first sliding groove 111 and the second sliding groove 112 are circular arc sliding grooves.

In some other embodiments, in the X-axis direction, the first sliding groove 111 and the second sliding groove 112 may also be partially or completely overlapped to reduce the size of the fixed base 11 in the X-axis direction. Alternatively, along the Y-axis direction, the first sliding groove 111 and the second sliding groove 112 may be partially or completely overlapped, so as to reduce the size of the fixed base in the Y-axis direction. It should be noted that overlapping arrangement refers to projection overlapping. For example, in the X-axis direction, a partial overlapping arrangement between the first sliding groove 111 and the second sliding groove 112 refers to a partial overlapping arrangement between the first sliding groove 111 and the second sliding groove 112 on the X-Z-axis plane. The overlapping arrangement mentioned later may be understood in the same way.

In addition, the fixed base 11 is further provided with an avoidance groove 119, a first fixing hole 11a, and a second fixing hole 11b. The avoidance slot 119 is symmetrical about the center axis C. An opening of the avoidance groove 119 is located on a top surface 113 of the fixed base 11. The avoidance groove 119 is recessed in a direction from the top surface 113 of the fixed base 11 to the bottom surface 114, and runs through a groove side wall of the first sliding groove 111 and a groove side wall of the second sliding groove 112. The avoidance groove 119 further runs through the front side 117 and the rear side 118 of the fixed base 11. For example, the avoidance groove 119 is a circular arc sliding groove. In some other embodiments, the avoidance groove 119 may also be a square sliding groove or another-shape sliding groove.

The first fixing hole 11a and the second fixing hole 11b are symmetrical about the center axis C. An opening of the first fixing hole 11a is located in a groove bottom wall of the first sliding groove 111. The first fixing hole 11a is recessed from the groove bottom wall of the first sliding groove 111 toward the right side 116 of the fixed base 11, and runs through the right side 116 of the fixed base 11. An opening of the second fixing hole 11b is located in a groove bottom wall of the second sliding groove 112. The second fixing hole 11b is recessed from the groove bottom wall of the second sliding groove 112 toward the left side 115 of the fixed base 11, and runs through the left side 115 of the fixed base 11. For example, both the first fixing hole 11a and the second fixing hole 11b are circular holes. In some other embodiments, the first fixing hole 11a and the second fixing hole 11b may also be square holes or other abnormal holes.

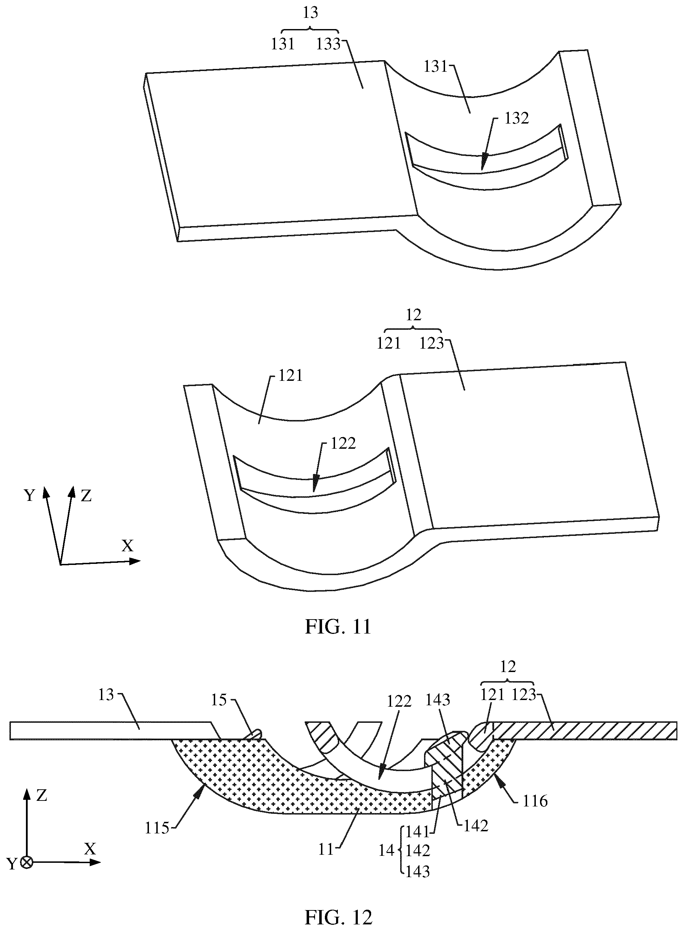

FIG. 11 is a schematic structural diagram of a first swing arm 12 and a second swing arm 13 in the rotation component 10 shown in FIG. 9.

The first swing arm 12 further includes a first swing part 123, and the first swing part 123 is fixedly connected to the first rotation shaft part 121. The first rotation shaft part 121 is located at one end of the first swing arm 12, and the first swing part 123 is fixed to one end of the first rotation shaft part 121. The first rotation shaft part 121 is in a circular arc shape, and the first swing part 123 is in a planar shape. The first rotation shaft part 121 projects in a direction that is opposite to a top surface of the first swing part 123, and is adapted to the first sliding groove 111.

It should be noted that adaptation of the first rotation shaft part 121 to the first sliding groove 111 means that an arc radius of a bottom surface of the first rotation shaft part 121 is the same as an arc radius of the first sliding groove 111, so that the first rotation shaft part 121 may slide in the first sliding groove 111, so as to implement relative rotation between the first rotation shaft part 121 and the fixed base 11. The adaptation mentioned later may be understood in the same way.

The first sliding hole 122 is disposed in a middle of the first rotation shaft part 121. Specifically, the opening of the first sliding hole 122 is located on the top surface of the first rotation shaft part 121. The first sliding hole 122 is recessed from a top-bottom direction of the first rotation shaft part 121, and runs through a bottom surface of the first rotation shaft part 121. In other words, the first sliding hole 122 runs through the first rotation shaft part 121 in a thickness direction of the first rotation shaft part 121. For example, the first sliding hole 122 is a circular arc hole, and a circular arc radius of the first sliding hole 122 is the same as a circular arc radius of the first rotation shaft part 121.

In this embodiment, a structure of the second swing arm 13 is the same as that of the first swing arm 12. The second swing arm 13 further includes a second swing part 133, and the second swing part 133 is fixedly connected to the second rotation shaft part 131. The second rotation shaft part 131 is located at one end of the second swing arm 13, and the second swing part 133 is fixedly connected to one end of the second rotation shaft part 131. The second rotation shaft part 131 is in a circular arc shape, and the second swing part 133 is in a planar shape. The second rotation shaft part 131 projects in a direction facing away from the top surface of the second swing part 133. The second rotation shaft part 131 is adapted to the second sliding groove 112.

The second sliding hole 132 is disposed in a middle of the second rotation shaft part 131. Specifically, the opening of the second sliding hole 132 is located on the top surface of the second rotation shaft part 131. The second sliding hole 132 is recessed from a top-bottom direction of the second rotation shaft part 131, and runs through a bottom surface of the second rotation shaft part 131. In other words, the second sliding hole 132 runs through the second rotation shaft part 131 in a thickness direction of the second rotation shaft part 131. For example, the second sliding hole 132 is a circular arc hole, and a circular arc radius of the second sliding hole 132 is the same as a circular arc radius of the second rotation shaft part 131.

Referring to FIG. 8 and FIG. 12, FIG. 12 is a schematic cross-sectional structural diagram of the rotation component 10 shown in FIG. 8 cut along A-A. In the accompanying drawings of this application, cutting along "A-A" means cutting along a plane in which the A-A line is located, and descriptions of the accompanying drawings are the same in the following description.

Both the first swing arm 12 and the second swing arm 13 are installed on the fixed base 11, and are symmetrical about the center axis C. Specifically, the first rotation shaft part 121 is installed in the first sliding groove 111, and the first swing part 123 projects relative to the first sliding groove 111. The first swing part 123 projects relative to the right side 116 of the fixed base 11. When the first swing part 123 rotates relative to the fixed base 11, the first rotation shaft part 121 rotates relative to the fixed base 11 in the first sliding groove 111, so as to implement rotation of the first swing arm 12 relative to the fixed base 11. The second rotation shaft part 131 is installed in the second sliding groove 112, and the second swing part 133 projects relative to the second sliding groove 112. The second swing part 133 projects relative to the left side 115 of the fixed base 11. When the second swing part 133 rotates relative to the fixed base 11, the second rotation shaft part 131 rotates relative to the fixed base 11 in the second sliding groove 112, so as to implement rotation of the second swing arm 13 relative to the fixed base 11.

In this case, the angle between the first swing part 123 and the second swing part 133 is β. In the X-axis direction, the first rotation shaft part 121 and the second rotation shaft part 131 are arranged in an overlapping manner. In the X-axis direction, the first rotation shaft part 121 and the second rotation shaft part 131 are partially arranged in an overlapping manner, so as to reduce the size of the rotation component 10 in the X-axis direction, and further reduce the size of the rotation mechanism 130 in the X-axis direction, which helps to implement a miniaturization design of the rotation mechanism 130. In the Y-axis direction, the first rotation shaft part 121 and the second rotation shaft part 131 are arranged at intervals.

In some other embodiments, in the X-axis direction, the first rotation shaft part 121 and the second rotation shaft part 131 may be arranged in an overlapping manner, or the first rotation shaft part 121 and the second rotation shaft part 131 may be arranged at intervals. Alternatively, in the Y-axis direction, the first rotation shaft part 121 and the second rotation shaft part 131 may also be partially or completely overlapped, so as to reduce the size of the rotation component 10 in the Y-axis direction, thereby reducing the size of the rotation mechanism 130 in the Y-axis direction, which helps to implement a miniaturization design of the rotation mechanism 130.

When the first rotation shaft part 121 rotates relative to the fixed base 11, the first limiting member 14 slides relative to the first rotation shaft part 121 along the first sliding hole 122. Specifically, when the first rotation shaft part 121 rotates relative to the fixed base 11, the first rotation shaft part 121 slides relative to the first limiting member 14 along the first sliding hole 122, so that the first limiting member 14 slides relative to the first rotation shaft part 121 along the first sliding hole 122. A top surface of the first limiting member 14 is located between the top surface of the first swing part 123 and the top surface of the first rotation shaft part 121. That is, the top surface of the first limiting member 14 does not protrude relative to the top surface of the first swinging part 123, so that the first limiting member 14 reuses space in the Z-axis direction with the first rotation shaft part 121 and the fixed base 11, so as to reduce the size of the rotation component 10 in the Z-axis direction, thereby reducing a thickness of the rotation mechanism 130, which helps to implement an ultra-thin design of the rotation mechanism 130, thereby implementing an ultra-thin design of the foldable terminal 1000.

In this embodiment, a part of the first limiting member 14 is located in the first fixing hole 11a, a part of the first limiting member 14 is located in the first sliding hole 122, and a part of the first limiting member 14 is exposed relative to the top surface of the first rotation shaft part 121. Specifically, the first limiting member 14 includes a first fixing part 141, a first sliding part 142, and a first limiting member part 143 that are sequentially connected. The first fixing part 141, the first sliding part 142, and the first limiting member 143 are integrally formed. The first fixing part 141 is located in the first fixing hole 11a, and is fixed to a hole wall of the first fixing hole 11a, so as to implement fixed connection between the first limiting member 14 and the fixed base 11. The first sliding part 142 is located in the first sliding hole 122. A top surface of the first limiting member 143 is exposed relative to the first rotation shaft part 121. A bottom surface of the first limiting member 143 is clamped on the top surface of the first rotation shaft part 121, so as to limit the first rotation shaft part 121 in the Z-axis direction, so that no misalignment occurs between the first swing arm 12 and the fixed base 11 in the Z-axis direction, thereby improving assembly stability between the first swing arm 12 and the fixed base 11. When the first rotation shaft part 121 rotates relative to the fixed base 11, the first sliding part 142 slides relative to the first rotation shaft part 121 in the first sliding hole 122, so as to limit the first rotation shaft part 121 in the Y-axis direction, so that no misalignment occurs between the first swing arm 12 and the fixed base 11 in the Y-axis direction, thereby limiting a rotation track of the first rotation shaft part 121 relative to the fixed base 11.

In some other embodiments, the first limiting member 14 may further include an auxiliary limiting member (not shown in the figure), the auxiliary limiting member is connected to an end of the first fixing part 141 away from the first sliding part 142, and the auxiliary limiting member is exposed to the right side 116 of the fixed base 11. A top surface of the auxiliary limiting member is clamped on the right side 116 of the fixed base 11, so as to limit the fixed base 11 in the Z-axis direction, thereby improving assembly stability between the fixed base 11 and the first swing arm 12. In this case, the first fixing part 141 may be located in the first fixing hole 11a, and is not fixed to a hole wall of the first fixing hole 11a.

A structure of the second limiting member 15 is the same as that of the first limiting member 14. The second limiting member 15 and the first limiting member 14 are symmetrical about the center axis C. When the second rotation shaft part 131 rotates relative to the fixed base 11, the second limiting member 15 slides relative to the second rotation shaft part 131 along the second sliding hole 132. Specifically, when the second rotation shaft part 131 rotates relative to the fixed base 11, the second rotation shaft part 131 slides relative to the second limiting member 15, so that the second limiting member 15 slides relative to the second rotation shaft part 131 in the second sliding hole 132. A top surface of the second limiting member 14 is located between the top surface of the second swinging part 133 and the top surface of the second rotation shaft part 131. That is, the top surface of the second limiting member 14 does not protrude relative to the top surface of the second swinging part 133, so that the second limiting member 15 reuses space in the Z-axis direction with the second rotation shaft part 131 and the fixed base 11, so as to reduce the size of the rotation component 10 in the Z-axis direction, thereby reducing a thickness of the rotation mechanism 130, which helps to implement an ultra-thin design of the rotation mechanism 130, thereby implementing an ultra-thin design of the foldable terminal 1000.

In this embodiment, a part of the second limiting member 15 is located in the second fixing hole 11b, a part of the second limiting member 15 is located in the second sliding hole 132, and a part of the second limiting member 15 is exposed relative to the top surface of the second rotation shaft part 131. Specifically, the second limiting member 15 includes a second fixing part, a second sliding part, and a second limiting member part that are sequentially connected (not shown in the figure). The second fixing part, the second sliding part, and the second limiting member are integrally formed. The second fixing part is located in the second fixing hole 11b, and is fixedly connected to the hole wall of the second fixing hole 11b, so as to implement fixed connection between the second limiting member 15 and the fixed base 11. The second sliding part is located in the second sliding hole 132. A top surface of the second limiting member is exposed relative to the second rotation shaft part 131. A bottom surface of the second limiting member is clamped on the top surface of the second rotation shaft part 131, so as to limit the second rotation shaft part 131 in the Z-axis direction, so that no misalignment occurs between the second swing arm 13 and the fixed base 11 in the Z-axis direction, thereby improving assembly stability between the second swing arm 13 and the fixed base 11. When the second rotation shaft part 131 rotates relative to the fixed base 11, the second sliding part slides relative to the second rotation shaft part 131 in the second sliding hole 132, so as to limit the second rotation shaft part 131 in the Y-axis direction, so that no misalignment occurs between the second swing arm 15 and the fixed base 11 in the Y-axis direction, thereby limiting a rotation track of the second rotation shaft part 131 relative to the fixed base 11.

In an implementation, the rotation component 10 may further include a drive member (not shown in the figure), and the drive member is connected between the first swing arm 12 and the second swing arm 13, so that when the first swing arm 12 rotates relative to the fixed base 11, the second swing arm 13 rotates relative to the fixed base 11, or when the second swing arm 13 rotates relative to the fixed base 11, the first swing arm 12 rotates relative to the fixed base 11, so as to implement synchronization between the first swing arm 12 and the second swing arm 13 relative to the fixed base 11. For example, the drive member may be a gear or another part that can implement transmission.

In the rotation component 10 shown in this embodiment, rotation of the rotation mechanism 130 can be implemented only by using the fixed base 11, the first swing arm 12, and the second swing arm 13. A structure of the rotation mechanism 130 shown in this embodiment is simple, which helps reduce costs of the rotation mechanism 130. In addition, compared with an existing rotation mechanism, the first swing arm 12 and the second swing arm 13 respectively slide with the first sliding groove 111 and the second sliding groove 112 of the fixed base 11, that is, rotation of the rotation component 10 may be implemented by using a single-layer sliding groove, which is conducive to reducing the thickness of the fixed base 11, the first swing arm 12, and the second swing arm 13. In this embodiment, the rotation component 10 may reduce the thickness (about 0.6 mm) of at least one layer of a structural member, which is conducive to implementing a light and thin design of the rotation component 10, and further helps implement a light and thin design of the rotation mechanism 130.

In addition, a rotation track of each of the first swing arm 12 and the second swing arm 13 relative to the fixed base 11 may be limited by cooperation between the first limiting member 14 and the second limiting member 15 and the fixed base 11, so as to prevent misalignment between the first swing arm 12 and the second swing arm 13 and the fixed base 11 in the Y-axis direction and the Z-axis direction, thereby improving rotation stability of the rotation component 10.

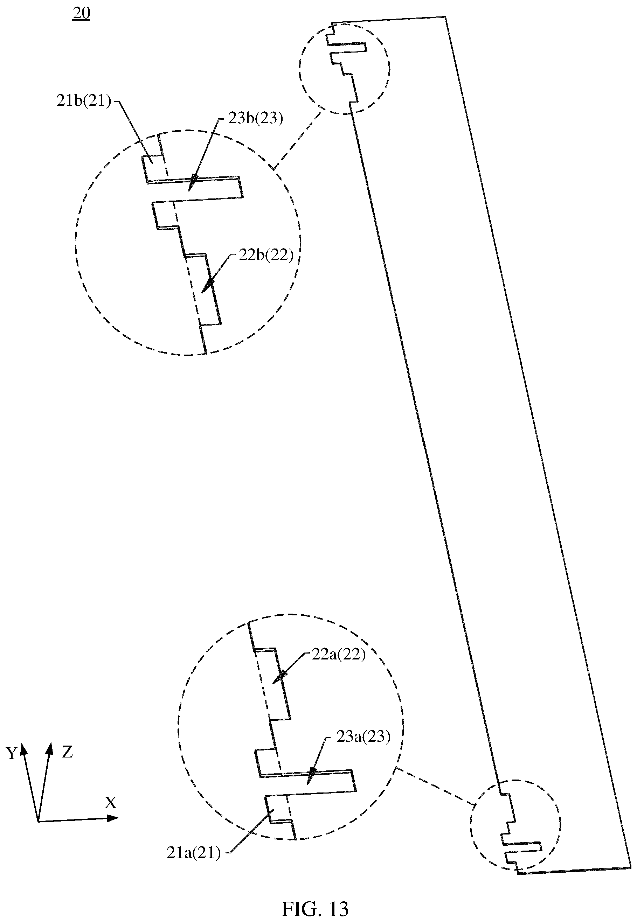

Referring to FIG. 6 and FIG. 13, FIG. 13 is a schematic structural diagram of a first support plate 20 in the rotation component 10 shown in FIG. 6.

The first support plate 20 is symmetrical about a symmetry plane O. The first support plate 20 is generally strip-shaped. For example, the first support plate 20 is a steel sheet made of steel. Specifically, the first support plate 20 includes a left side (not marked in the figure) facing the second support plate 30 and a right side (not marked in the figure) facing away from the second support plate 30. The left side and the right side of the first support plate 20 are disposed opposite each other. The first support plate 20 is provided with a first protrusion 21 and a first notch 22. The first protrusion 21 is connected to the left side of the first support plate 20. The first protrusion 21 extends from the left side of the first support plate 20 in a direction facing away from the right side. In addition, the first protrusion 21 further includes a left side (not marked in the figure) facing the second support plate 30.

For example, there are two first protrusions 21, and the two first protrusions 21 are arranged at intervals along the Y-axis direction. The two first protrusions 21 are respectively a first front protrusion 21a and a first rear protrusion 21b, and the first front protrusion 21a and the first rear protrusion 21b are symmetric with respect to the symmetric surface O. In some other embodiments, the first front protrusion 21a and the first rear protrusion 21b may also be symmetrical without reference to the symmetry plane O.

An opening of the first notch 22 is located on the left side of the first support plate 20. The first notch 22 is recessed from the left side of the first support plate 20 towards the right side. The first notch 22 further runs through the top surface and the bottom surface (not marked in the figure) of the first support plate 20. That is, the first notch 22 further runs through the first support plate 20 in a thickness direction of the first support plate 20. For example, there are two first notches 22. Both the two first notches 22 are located between the first front protrusion 21a and the first rear protrusion 21b, and are arranged at intervals in the Y-axis direction. The two first notches 22 are respectively a first front notch 22a and a first rear notch 22b, and the first front notch 22a and the first rear notch 22b are symmetrical about the symmetry plane O. In addition, the first front notch 22a is closer to the first front protrusion 21a than the first rear notch 22b, and is disposed at intervals from the first front protrusion 21a. The first rear notch 22b is closer to the first rear protrusion 21b than the first front notch 22a, and is disposed at intervals from the first rear protrusion 21b. In some other embodiments, the first front protrusion 21a and the first rear protrusion 21b may also be symmetrical without reference to the symmetry plane O.

In addition, the first support plate 20 is further provided with a first avoidance hole 23, and an opening of the first avoidance hole 23 is located on a bottom surface of the first support plate 20. The first avoidance hole 23 is recessed from the bottom surface of the first support plate 20 towards the top surface, and runs through the top surface of the first support plate 20. That is, the first avoidance hole 23 runs through the first support plate 20 in a thickness direction of the first support plate 20. The first avoidance hole 23 further runs through the left side of the first protrusion 21. For example, there are two first avoidance holes 23, and the two first avoidance holes 23 are arranged at intervals along the Y-axis direction. The two first avoidance holes 23 are respectively a first front avoidance hole 23a and a first rear avoidance hole 23b, and the first front avoidance hole 23a and the first rear avoidance hole 23b are symmetric with respect to the symmetry plane O. In addition, the first front avoidance hole 23a further runs through the left side of the first front protrusion 21a, and the first rear avoidance hole 23b further runs through the left side of the first rear protrusion 21b. In some other embodiments, the first front avoidance hole 23a and the first rear avoidance hole 23b may also be symmetrical without reference to the symmetry plane O.

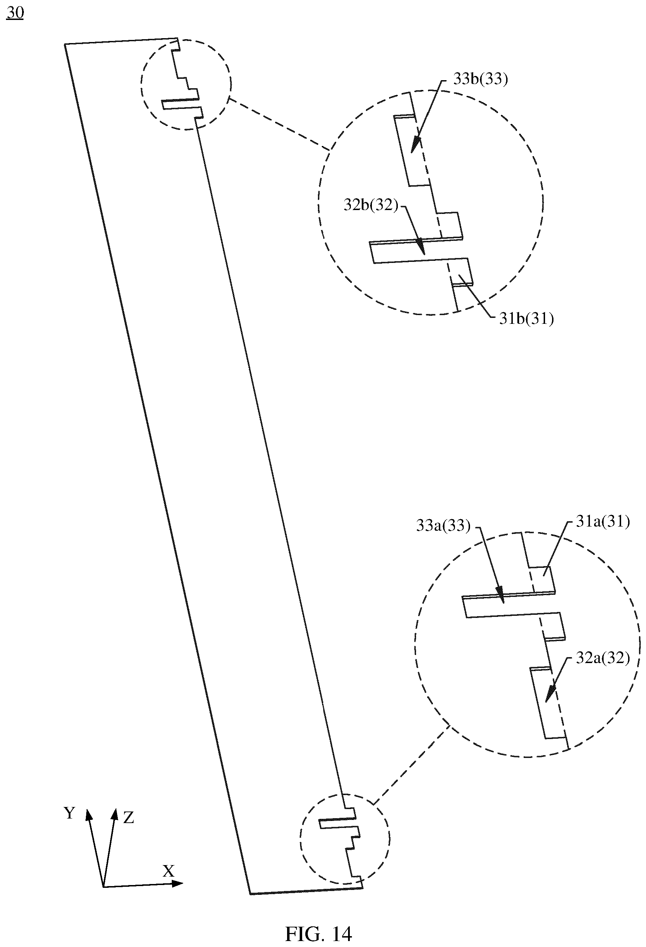

Referring to FIG. 6 and FIG. 14, FIG. 14 is a schematic structural diagram of a second support plate 30 in the rotation component 10 shown in FIG. 6.

The second support plate 30 cooperates with the first support plate 20. The second support plate 30 is symmetrical about the symmetry plane O. The second support plate 30 is in a strip shape. For example, the second support plate 30 is a steel sheet made of steel. Specifically, the second support plate 30 includes a right side (not marked in the figure) facing the first support plate 20 and a left side (not marked in the figure) facing away from the first support plate 20. The second support plate 30 is provided with a second protrusion 31 and a second notch 32. The second protrusion 31 is connected to the right side of the second support plate 30. The second protrusion 31 extends from the right side of the second support plate 30 in a direction facing away from the left side. In addition, the second protrusion 31 further includes a right side (not marked in the figure) facing the first support plate 20. The second protrusion 31 is adapted to the first notch 22 (as shown in FIG. 13). It should be noted that adaptation of the protrusion to the notch means that a shape and a size of the protrusion are the same as a shape and a size of the notch. The protrusion and the notch mentioned later can be adapted for the same purpose.

For example, there are two second protrusions 31, and the two second protrusions 31 are arranged at intervals along the Y-axis direction. The two second protrusions 31 are respectively a second front protrusion 31a and a second rear protrusion 31b, and the second front protrusion 31a and the second rear protrusion 31b are symmetrical about a symmetrical surface O. In some other embodiments, the second front protrusion 31a and the second rear protrusion 31b may also be symmetrical without reference to the symmetry plane O.

An opening of the second notch 32 is located on the right side of the second support plate 30. The second notch 32 is recessed from the right side to the left side of the second support plate 30. The second notch 32 further runs through the top surface and the bottom surface (not marked in the figure) of the second support plate 30. That is, the second notch 32 further runs through the second support plate 30 in a thickness direction of the second support plate 30. The second notch 32 is adapted to the first protrusion 21 (as shown in FIG. 13).

For example, there are two second notches 32, and the two second notches 32 are respectively located on opposite sides of the two second protrusions 31, and are arranged at intervals in the Y-axis direction. The two second notches 32 are respectively a second front notch 32a and a second rear notch 32b, and the second front notch 32a and the second rear notch 32b are symmetrical about the symmetry plane O. In addition, the second front notch 32a is located on a side of the second front protrusion 31a facing the second rear protrusion 31b, and is disposed at intervals from the second front protrusion 31a. The second rear notch 32b is located on a side of the second rear protrusion 31b facing the second front protrusion 31a, and is disposed at intervals from the second rear protrusion 31b. In some other embodiments, the first front protrusion 21a and the first rear protrusion 21b may also be symmetrical without reference to the symmetry plane O.

In addition, the second support plate 30 is further provided with a second avoidance hole 33, and an opening of the second avoidance hole 33 is located on a bottom surface of the second support plate 30. The second avoidance hole 33 is recessed from the bottom surface of the second support plate 30 towards the top surface, and runs through the top surface of the second support plate 30. That is, the second avoidance hole 33 runs through the second support plate 30 in a thickness direction of the second support plate 30. The second avoidance hole 33 further runs through the right side of the second protrusion 31. For example, there are two second avoidance holes 33, and the two second avoidance holes 33 are arranged at intervals along the Y-axis direction. The two second avoidance holes 33 are respectively a second front avoidance hole 33a and a second rear avoidance hole 33b, and the second front avoidance hole 33a and the second rear avoidance hole 33b are symmetric with respect to the symmetry plane O. In addition, the second front avoidance hole 33a further runs through the right side of the second front protrusion 31a, and the second rear avoidance hole 33b further runs through the right side of the second rear protrusion 31b. In some other embodiments, the second front avoidance hole 33a and the second rear avoidance hole 33b may also be symmetrical without reference to the symmetry plane O.

Referring to FIG. 6 and FIG. 7, two rotation components 10 are connected between the first support plate 20 and the second support plate 30, so as to implement rotational connection between the first support plate 20 and the second support plate 30. Specifically, the first rotation component 10a is connected to one end of the first support plate 20 and the second support plate 30, and the second rotation component 10a is connected to the other end of the first support plate 20 and the second support plate 30. The first rotation component 10a and the second rotation component 10b are symmetrical about the symmetry plane O. It should be noted that a structure of the second rotation component 10b is symmetrical to a structure of the first rotation component 10a. For the structure of the second rotation component 10b, refer to the foregoing description of the first rotation component 10a. Details are not described herein again. In some other embodiments, the first rotation component 10a and the second rotation component 10b may also be symmetrical without reference to the symmetry plane O.

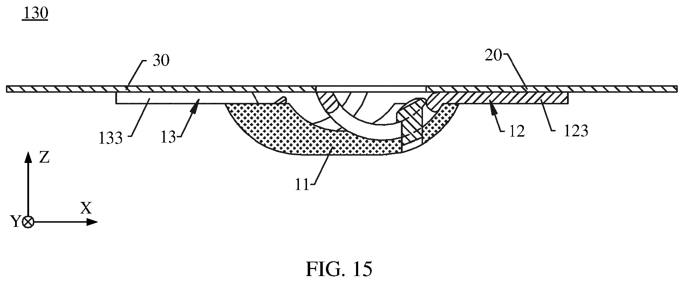

Referring to FIG. 15 at the same time, FIG. 15 is a schematic cross-sectional structural diagram of the rotation mechanism 130 shown in FIG. 6 cut along B-B.

The first support plate 20 is fixed to the first swing part 123 of the first swing arm 12, and the second support plate 30 is fixed to the second swing part 133 of the second swing arm 13. Specifically, the first support plate 20 is fixedly connected to the top surface of the first swing part 123, and the second support plate 30 is fixedly connected to the top surface of the second swing part 133. The bottom surface of the first support plate 20 is in contact with the top surface of the first swing part 123, and the bottom surface of the second support plate 30 is in contact with the top surface of the second swing part 133. For example, fixed connection may be implemented between the first swing part 123 and the first support plate 20 through welding, riveting, or glue dispensing, and fixed connection may be implemented between the first swing part 123 and the second support plate 30 through welding, riveting, or glue dispensing.

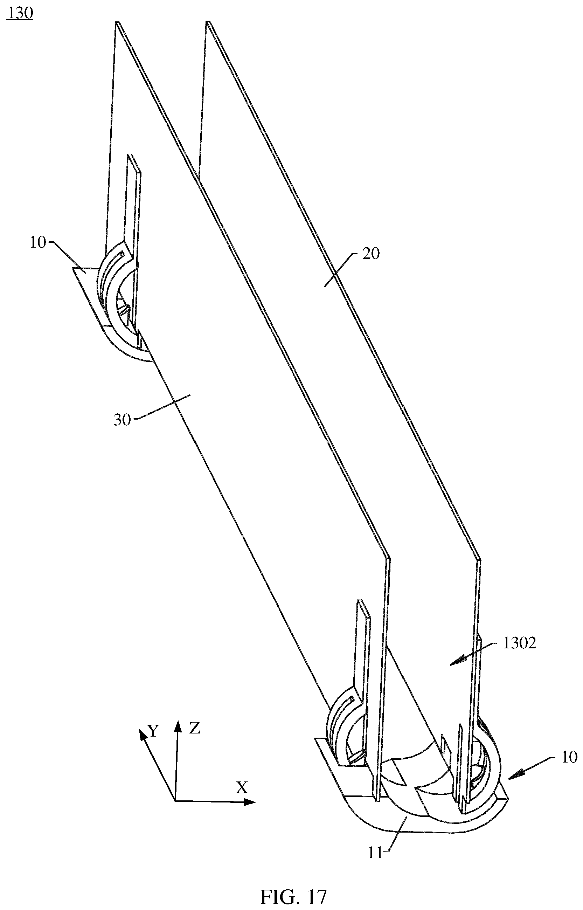

Referring to FIG. 6, FIG. 16, and FIG. 17, FIG. 16 is a schematic structural diagram of the rotation mechanism 300 shown in FIG. 6 in a second state, and FIG. 17 is a schematic structural diagram of the rotation mechanism 300 shown in FIG. 6 in a third state.

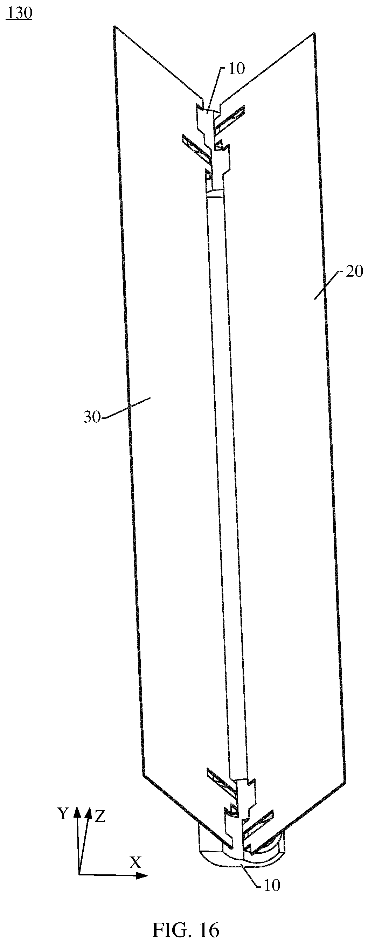

When the first swing arm 12 and the second swing arm 13 rotate relative to the fixed base 11, the first support plate 20 and the second support plate 30 rotate relative to the fixed base 11, so that the first support plate 20 and the second support plate 30 rotate relative to each other, and the rotation mechanism 130 switches between the folded state and the unfolded state. Specifically, the first swing arm 12 and the second swing arm 13 may be relatively rotated to be relatively disposed, so that the first support plate 20 and the second support plate 30 are relatively rotated to fold relatively, so that the rotation mechanism 300 is in a folded state, as shown in FIG. 17. The first swing arm 12 and the second swing arm 13 may also be rotated relative to each other, so that the first support plate 20 and the second support plate 30 are rotated relative to each other, so that the rotation mechanism 300 is in an unfolded state, as shown in FIG. 6 and FIG. 16.

For example, the rotation mechanism 300 shown in FIG. 6 is in a flattened state, an angle between the first swing part 123 and the second swing part 133 is β, and an angle between the first support plate 20 and the second support plate 30 is β. The rotation mechanism 300 shown in FIG. 16 is in an unfolded state. The rotation mechanism 300 shown in FIG. 16 is a schematic structural diagram of a rotation mechanism in the foldable terminal 1000 shown in FIG. 2. An angle between the first swing part 123 and the second swing part 133 is α, and an angle between the first support plate 20 and the second support plate 30 is α. The rotation mechanism 300 shown in FIG. 17 is in a folded state. The rotation mechanism 300 shown in FIG. 17 is a schematic structural diagram of a rotation mechanism in the foldable terminal 1000 shown in FIG. 1. An angle between the first swing part 123 and the second swing part 133 is 0 degrees, and an angle between the first support plate 20 and the second support plate 30 is 0 degrees. In this case, the first support plate 20, the second support plate 30, and the fixed base 11 are surrounded to form the avoidance space 1302.

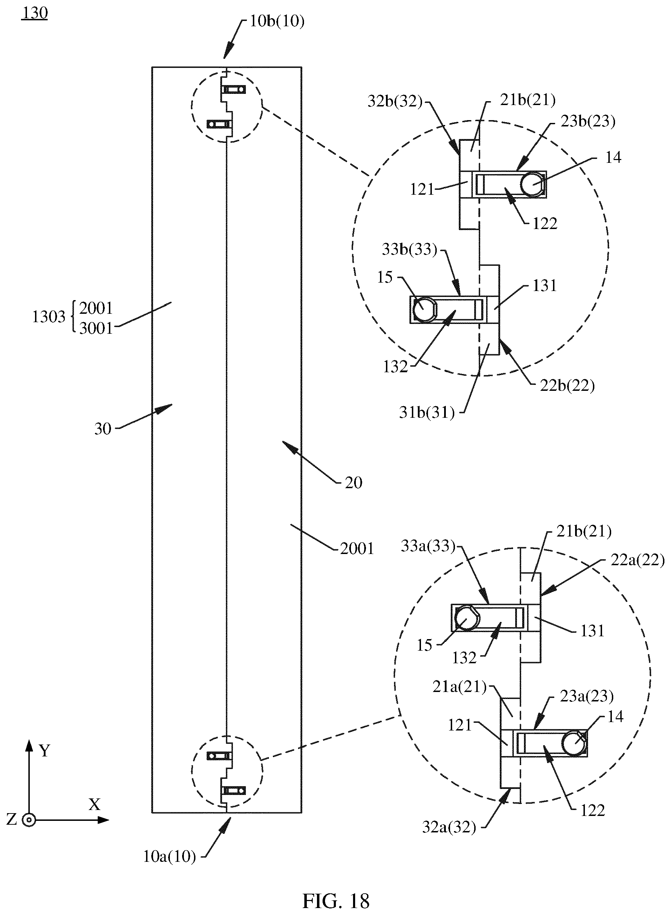

FIG. 18 is a schematic diagram of a plane structure of the rotation mechanism 130 shown in FIG. 6.

A projection of the first protrusion 21 of the first support plate 20 on the first swing arm 12 is located in the first rotation shaft part 121, so as to prevent interference between the first support plate 20 and the fixed base 11 when the first support plate 20 rotates relative to the fixed base 11, thereby improving rotation fluency of the rotation mechanism 130. Specifically, a projection of the first front protrusion 21a on the first swing arm 12 of the first rotation component 10a is located on the first rotation shaft part 121 of the first rotation component 10a, and a projection of the first rear protrusion 21b on the first swing arm 12 of the second rotation component 10b is located on the first rotation shaft part 121 of the second rotation component 10b. It should be noted that the projections described in the embodiments of this application are all positive projections. A related description in the following may be used for a same understanding.

A projection of the first notch 22 of the first support plate 20 on the second swing arm 13 is located in the second rotation shaft part 131. Specifically, a projection of the first front notch 22a on the second swing arm 13 of the first rotation component 10a is located on the second rotation shaft part 131 of the second rotation component 10a, and a projection of the first rear notch 22b on the second swing arm 13 of the second rotation component 10b is located on the second rotation shaft part 131.

In addition, the first avoidance hole 23 of the first support plate 20 is configured to avoid the first limiting member 14 of the rotation component 10. Specifically, the projection of the first avoidance hole 23 on the first swing arm 12 covers the first sliding hole 123, and covers the projection of the first limiting member 14 on the first swing arm 12, so as to prevent interference between the first support plate 20 and the first limiting member 14 when the first support plate 20 rotates relative to the fixed base 11, thereby ensuring smooth rotation of the rotation mechanism 130. The first front avoidance hole 23a is configured to avoid the first limiting member 14 of the first rotation component 10a, and the first rear avoidance hole 23b is configured to avoid the first limiting member 14 of the second rotation component 10b.

A projection of the second protrusion 31 of the second support plate 30 on the second swing arm 13 is located in the second rotation shaft part 131, so as to prevent interference between the second support plate 30 and the second limiting member 15 when the second support plate 30 rotates relative to the fixed base 11, thereby improving rotation fluency of the rotation mechanism 130. Specifically, a projection of the second front protrusion 31a on the second swing arm 13 of the first rotation component 10a is located in the second rotation shaft part 131 of the first rotation component 10a, and a projection of the second rear protrusion 31b on the second swing arm 13 of the second rotation component 10b is located in the second rotation shaft part 131 of the second rotation component 10b.

A projection of the second notch 32 of the second support plate 30 on the first swing arm 12 is located in the first rotation shaft part 121. Specifically, a projection of the second front notch 32a on the first swing arm 12 of the first rotation component 10a is located on the first rotation shaft part 121 of the first rotation component 10a, and a projection of the second rear notch 32b on the first swing arm 12 of the second rotation component 10b is located on the first rotation shaft part 121 of the second rotation component 10b.

In addition, the second avoidance hole 33 of the second support plate 30 is configured to avoid the second limiting member 15 of the rotation component 10. Specifically, the projection of the second avoidance hole 33 on the second swing arm 13 covers the second sliding hole 122, and covers the projection of the second limiting member 15 on the second swing arm 13, so as to prevent interference between the second support plate 30 and the second limiting member 15 when the second support plate 30 rotates relative to the fixed base 11, thereby ensuring smooth rotation of the rotation mechanism 130. The second front avoidance hole 33a is configured to avoid the second limiting member 15 of the first rotation component 10a, and the second rear avoidance hole 33b is configured to avoid the second limiting member 15 of the second rotation component 10b.

In this embodiment, when the rotation mechanism 130 is in a flattened state, the first support plate 20 and the second support plate 30 cooperate with each other. A top surface 2001 of the first support plate 20 and a top surface of the second support plate 3001 form a support surface 1303. Specifically, the two first protrusions 21 of the first support plate 20 are respectively engaged with the two second notches 32 of the second support plate 30, and the two second protrusions 31 of the second support plate 30 are respectively engaged with the two first notches 22 of the first support plate 20, so as to avoid interference between the first support plate 20 and the second support plate 30 and the fixed base 11 when the first support plate 20 and the second support plate 30 rotate relative to the fixed base 11, thereby ensuring smooth rotation of the rotation mechanism 130. The first front protrusion 21a is engaged with the second front notch 32a, the first rear protrusion 21b is engaged with the second rear notch 32b, the second front protrusion 31a is engaged with the first front notch 22a, and the second rear protrusion 31b is engaged with the first rear notch 22b. It should be noted that engagement between the protrusion and the notch described in this embodiment of this application means that the protrusion is housed in the notch, and a side of the protrusion abuts against a side wall of the notch.

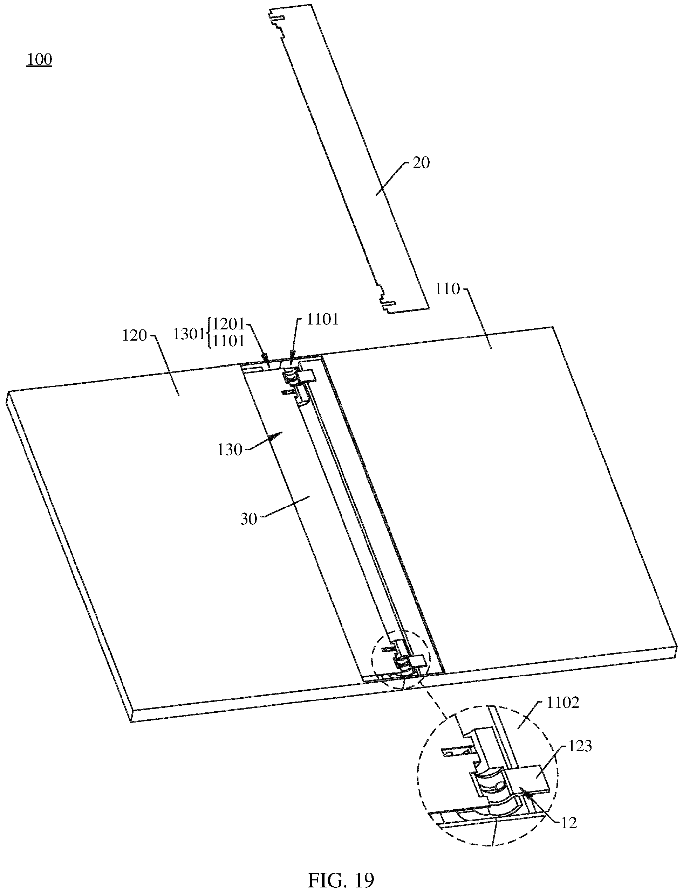

Referring to FIG. 15 and FIG. 19, FIG. 19 is a schematic structural diagram of partial decomposition of a foldable apparatus 100 in the foldable terminal 1000 shown in FIG. 4. In the foldable apparatus 100 shown in FIG. 19, the first support plate 20 of the rotation mechanism 130 is not installed in the first housing 110.

When the foldable apparatus 100 is in a flattened state, the rotation mechanism 130 is installed in a receiving space 1301. A part of the rotation mechanism 130 is installed in a first receiving groove 1101 of the first housing 110, and a part of the rotation mechanism 130 is installed in a second receiving groove 1201 of the second housing 120. Specifically, the first swing arm 12 is fixedly connected to the first housing 110, and the second swing arm 13 is fixedly connected to the second housing 120. The first swing part 123 of the first swing arm 12 is fixed to the first housing 110, and the second swing part 133 of the second swing arm 13 is fixed to the second housing 120. When the first housing 110 and the second housing 120 are relatively folded or unfolded, the first housing 110 drives the first swing arm 12 to rotate relative to the fixed base 11, and the second housing 120 drives the second swing arm 13 to rotate relative to the fixed base 11.

In this case, a bottom surface of the first swing part 123 is in contact with a step surface of the first step 1102, and a bottom surface of the second swing part 133 is in contact with a step surface of the second step 1202 (as shown in FIG. 5). For example, the first swing arm 12 may be fixed to the first housing 110 through a screw or a bolt, and the second swing arm 13 may be fixed to the second housing 120 through a screw or a bolt.

In this case, the support surface 1303 formed by the first support plate 20 and the second support plate 30 may support the foldable part 230 of the display screen 200, so as to ensure good display of the display screen 230. The top surface of the first support plate 20 is flush with the top surface of the first housing 110, and the top surface of the second support plate 30 is flush with the top surface of the second housing 120, so that the first support plate 20 and the second support plate 30 may jointly support the display screen 200 with the first housing 110 and the second housing 120, thereby implementing effective support of the flattened foldable apparatus 100 to the display screen 200.

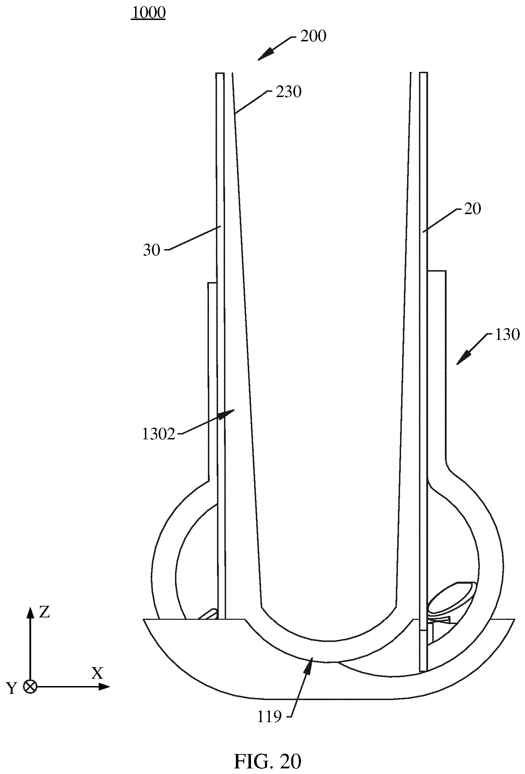

FIG. 20 is a schematic diagram of a partial structure of the foldable terminal 1000 shown in FIG. 1. The foldable terminal 1000 shown in FIG. 20 shows only the rotation mechanism 130 and the display screen 200.

When the foldable terminal 1000 is in the folded state, the foldable part 230 of the display screen 200 is located on the inside of the rotation mechanism 130. Specifically, the foldable part 230 is located in the avoidance space 1302. A part of the foldable part 230 is located between the first support plate 20 and the second support plate 30, and is disposed at intervals from the first support plate 20 and the second support plate 30. A part of the foldable part 230 is located in the avoidance groove 119 of the fixed base 11. In this case, the rotation mechanism 130 may avoid an R angle formed when the foldable part 230 is bent, so that the foldable part 230 does not bend at a relatively large angle, thereby avoiding a poor phenomenon such as a crease in the display screen 200, and helping to prolong service life of the display screen 200.

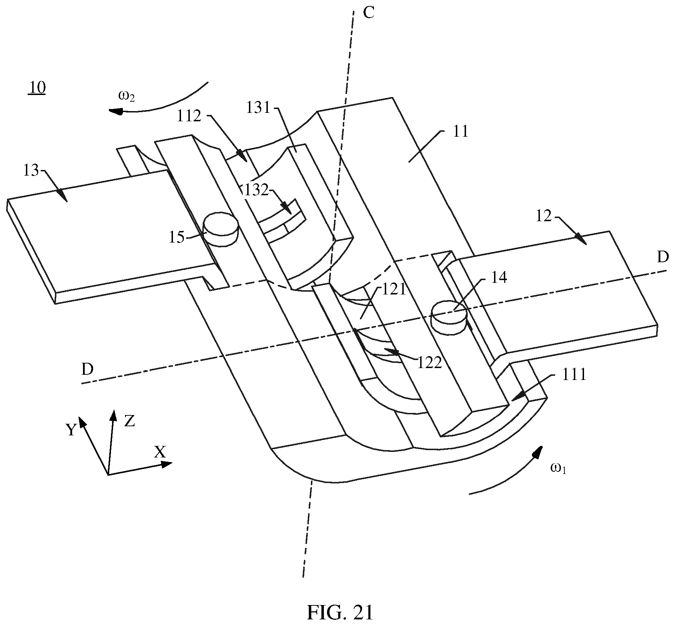

FIG. 21 is a schematic structural diagram of a rotation component 10 of a rotation mechanism in a second foldable terminal according to an embodiment of this application.

In this embodiment, the rotation component 10 has a central axis C, and the rotation component 10 is symmetrical about the central axis C. The rotation component 10 includes a fixed base 11, a first swing arm 12, a second swing arm 13, a first limiting member 14, and a second limiting member 15. The fixed base 11 is provided with a first sliding groove 111 and a second sliding groove 112. The first swing arm 12 includes a first rotation shaft part 121, and the first rotation shaft part 121 is provided with a first sliding hole 122. The first rotation shaft part 121 is installed in the first sliding groove 111, and may rotate relative to the fixed base 11. The second swing arm 13 includes a second rotation shaft part 131, and the second rotation shaft part 131 is provided with a second sliding hole 132. The second rotation shaft part 131 is installed in the second sliding groove 112, and may rotate relative to the fixed base 11. The first limiting member 14 is disposed in the first sliding hole 122, and is fixedly connected to the fixed base 11. The second limiting member 15 is disposed in the second sliding hole 132, and is fixedly connected to the fixed base 11.

Rotation directions of the first rotation shaft part 121 and the second rotation shaft part 131 are opposite relative to the fixed base 11. For example, the first rotation shaft part 121 rotates in a counterclockwise direction (in a direction shown by ω1 in the figure) relative to the fixed base 11, and the second rotation shaft part 131 rotates in a clockwise direction (in a direction shown by ω2 in the figure) relative to the fixed base 11. In this case, the first swing arm 12 and the second swing arm 13 rotate relative to the fixed base 11 to fold relatively. Alternatively, the first rotation shaft part 121 rotates in a clockwise direction relative to the fixed base 11, and the second rotation shaft part 122 rotates in a counterclockwise direction relative to the fixed base 11. In this case, the first swing arm 12 and the second swing arm 13 rotate relative to the fixed base 11 to unfold relatively.

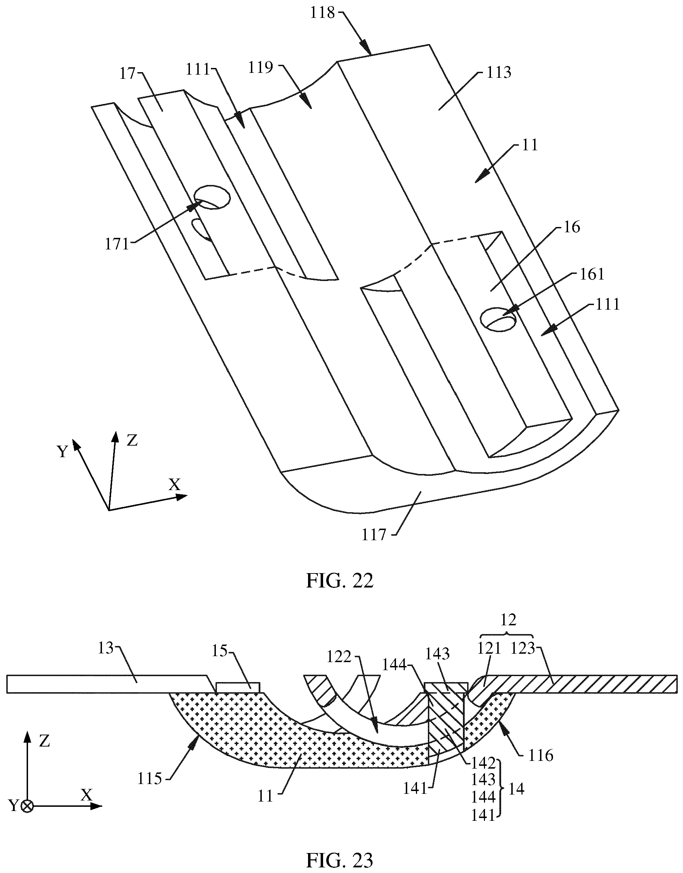

FIG. 22 is a schematic structural diagram of assembling a fixed base 11, a first auxiliary member 16, and a second auxiliary member 17 in the rotation component 10 shown in FIG. 21.

A difference between the rotation component 10 shown in this embodiment of this application and the rotation component 10 shown in the foregoing first embodiment lies in that the rotation component 10 further includes a first auxiliary member 16 and a second auxiliary member 17, and both the first auxiliary member 16 and the second auxiliary member 17 are fixed to the fixed base 11. The first auxiliary member 16 and the second auxiliary member 17 are symmetrical about the center axis C. For example, the fixed base 11, the first auxiliary member 16, and the second auxiliary member 17 may be integrally formed.

The first auxiliary member 16 is fixed to a groove side wall of the first sliding groove 111, and is disposed at intervals from a groove bottom wall of the first sliding groove 111. The first auxiliary member 16 extends from the groove side wall of the first sliding groove 111 to a front side 117 of the fixed base 11. A top surface (not marked in the figure) of the first auxiliary member 16 is flush with a top surface 113 of the fixed base 11, and a front side (not marked in the figure) of the first auxiliary member 16 is flush with a front side 117 of the fixed base 11. In addition, a left side (not marked in the figure) of the first auxiliary member 16 is a circular arc surface. The left side of the first auxiliary member 16 is connected to a groove side wall of the avoidance groove 119, and is located on a same arc as a groove side wall of the avoidance groove 119. That is, the left side of the first auxiliary member 16 and the groove side wall of the avoidance groove 119 respectively belong to two parts of a same circular arc surface.

The first auxiliary member 16 is further provided with a first limiting hole 161, and an opening of the first limiting hole 161 is located on the top surface of the first auxiliary member 16. The first limiting hole 161 is recessed in a top-bottom direction (not marked in the figure) of the first auxiliary member 16, and runs through the bottom surface of the first auxiliary member 16, so as to communicate with the first sliding groove 111.

In some other embodiments, the top surface of the first auxiliary member 16 may also be located between the top surface 113 and the bottom surface 114 of the fixed base 11. In other words, as long as the top surface of the first auxiliary member 16 does not protrude relative to the top surface 113 of the fixed base 11, it helps reduce the size of the rotation component 10 in the Z-axis direction, and helps implement a light and thin design of the rotation component 10.

The second auxiliary member 17 is fixed to a groove side wall of the second sliding groove 112, and is disposed at intervals from a groove bottom wall of the second sliding groove 112. The second auxiliary member 17 extends from the groove side wall of the second sliding groove 112 to the rear side 118 of the fixed base 11. A top surface (not marked in the figure) of the second auxiliary member 17 is flush with a top surface 113 of the fixed base 11, and a rear side (not marked in the figure) of the second auxiliary member 17 is flush with a rear side 118 of the fixed base 11. In addition, a right surface (not marked in the figure) of the second auxiliary member 17 is a circular arc surface. The right side of the second auxiliary member 17 is connected to a groove side wall of the avoidance groove 119, and is located on a same circular arc surface as a groove side wall of the avoidance groove 119. That is, the right side of the second auxiliary member 17 and the groove side wall of the avoidance groove 119 respectively belong to two parts of a same circular arc surface.

The second auxiliary member 17 is further provided with a second limiting hole 171, and an opening of the second limiting hole 171 is located on the top surface of the second auxiliary member 17. The second limiting hole 171 is recessed in a top-bottom direction (not marked in the figure) of the second auxiliary member 17, and runs through the bottom surface of the second auxiliary member 17, so as to communicate with the second sliding groove 112.

In some other embodiments, the top surface of the second auxiliary member 17 may also be located between the top surface 113 and the bottom surface 114 of the fixed base 11. In other words, as long as the top surface of the second auxiliary member 17 does not protrude relative to the top surface 113 of the fixed base 11, it helps reduce the size of the rotation component 10 in the Z-axis direction, and helps implement a light and thin design of the rotation component 10.

Referring to FIG. 21 and FIG. 23, FIG. 23 is a schematic cross-sectional structural diagram of the rotation component 10 shown in FIG. 21 cut along D-D.

Both the first swing arm 12 and the second swing arm 13 are installed on the fixed base 11, and are symmetrical about the center axis C. Specifically, the first rotation shaft part 121 is installed in the first sliding groove 111, and the first swing part 123 projects relative to the first sliding groove 111. The first rotation shaft part 121 is located between the first auxiliary member 16 and the groove bottom wall of the first sliding groove 11. That is, the first auxiliary member 16 is located on a side of the first rotation shaft part 121 that faces away from the groove bottom wall of the first sliding groove 111. In this case, the bottom surface of the first rotation shaft part 121 is in contact with a groove bottom wall of the first sliding groove 111, and the top surface of the first rotation shaft part 121 is in contact with the bottom surface of the first auxiliary member 16. In addition, the top surface of the first auxiliary member 16 is located between the top surface of the first swing part 123 and the top surface of the first rotation shaft part 121, that is, the top surface of the first auxiliary member 16 does not protrude relative to the top surface of the first swing part 123, so that the first auxiliary member 16 and the fixed base 11 and the first swing arm 12 reuse space in the Z-axis direction, so as to reduce the size of the rotation component 10 in the Z-axis direction, thereby implementing a light and thin design of the rotation mechanism.

The second rotation shaft part 131 is installed in the second sliding groove 112, and the second swing part 133 projects relative to the second sliding groove 112. The second rotation shaft part 131 is located between the second auxiliary member 17 and the groove bottom wall of the second sliding groove 112. That is, the second auxiliary member 17 is located on a side of the second rotation shaft part 131 that faces away from the second sliding groove 112. In this case, the bottom surface of the second rotation shaft part 131 is in contact with the groove bottom wall of the second sliding groove 112, and the top surface of the second rotation shaft part 131 is in contact with the bottom surface of the second auxiliary member 17. In addition, the top surface of the second auxiliary member 17 is located between the top surface of the second swing part 133 and the top surface of the second rotation shaft part 131, that is, the top surface of the second auxiliary member 17 does not protrude relative to the top surface of the second swing part 133, so that the second auxiliary member 17 reuses space in the Z-axis direction with the fixed base 11 and the second swing arm 13, so as to reduce the size of the rotation component 10 in the Z-axis direction, which helps to implement a light and thin design of the rotation mechanism.

The first limiting member 14 is further disposed in the first limiting hole 161. Specifically, a part of the first limiting member 14 is located in the first fixing hole (not marked in the figure), a part of the first limiting member 14 is located in the first sliding hole 122, a part of the first limiting member 14 is located in the first limiting hole 161, and a part of the first limiting member 14 is exposed to the top surface of the first auxiliary member 16. In this embodiment, the first limiting member 14 includes a first fixing part 141, a first sliding part 142, a first auxiliary member 144, and a first limiting member part 143 that are sequentially connected. For example, the first fixing part 141, the first sliding part 142, the first auxiliary member 144, and the first limiting member 143 may be integrally formed.

The first fixing part 141 is located in the first fixing hole 11a, and is fixed to a hole wall of the first fixing hole 11a, so as to implement fixed connection between the first limiting member 14 and the fixed base 11. The first sliding part 142 is located in the first sliding hole 122. The first auxiliary member 144 is located in the first limiting hole 161. For example, the first auxiliary member 144 may be fixedly connected to the hole wall of the first limiting hole 161, so as to implement fixed connection between the first limiting member 14 and the first auxiliary member 16. The first limiting member 143 is exposed relative to the top surface of the first auxiliary member 16. The bottom surface of the first limiting member 143 is clamped to the top surface of the first auxiliary member 16, so as to limit the first rotation shaft part 121 in the Z-axis direction, thereby improving assembly stability of the rotation component 10.

A structure of the second limiting member 15 is the same as that of the first limiting member 14. The second limiting member 15 is further disposed in the second limiting hole 171, and is symmetrical to the first limiting member 14 about the center axis C. Specifically, a part of the second limiting member 15 is located in the second fixing hole 11b, a part of the second limiting member 15 is located in the second sliding hole 132, a part of the second limiting member 15 is located in the second limiting hole 171, and a part of the second limiting member 15 is exposed to the top surface of the second auxiliary member 17.

In this embodiment, the second limiting member 15 includes a second fixing part, a second sliding part, a second auxiliary member, and a second limiting member part (not shown in the figure) that are sequentially connected. For example, the second fixing part, the second sliding part, the second auxiliary member, and the second limiting member may be integrally formed. The second fixing part is located in the second fixing hole 11b, and is fixedly connected to the hole wall of the second fixing hole 11b, so as to implement fixed connection between the second limiting member 15 and the fixed base 11. The first sliding part 142 is located in the second sliding hole 132. The second auxiliary member is located in the second limiting hole 171. For example, the second auxiliary member may be fixedly connected to the hole wall of the second limiting hole 171, so as to implement fixed connection between the second limiting member 15 and the second auxiliary member 17. The top surface of the second limiting member is exposed relative to the second auxiliary member 17. The bottom surface of the second limiting member is clamped to the top surface of the second auxiliary member 17, so as to limit the second rotation shaft part 131 in the Z-axis direction, thereby improving assembly stability of the rotation component 10.

It should be noted that another structure of the foldable terminal shown in this embodiment of this application is basically the same as another structure of the foldable terminal 1000 shown in the foregoing embodiment. Therefore, for another structure of the foldable terminal shown in this embodiment of this application, reference may be made to related descriptions of the foldable terminal 1000 shown in the foregoing embodiment, and details are not described herein again.

In this embodiment, by adding the first auxiliary member 16 and the second auxiliary member 17, a contact area between the first limiting member 14 and the second limiting member 15 and remaining components of the rotation component 10 is increased, so that a limiting effect of the first limiting member 14 and the second limiting member 15 is improved, and assembly stability between components of the rotation component 10 is further improved. In addition, both the left side of the first auxiliary member 16 and the right side of the second auxiliary member 17 are on a same circular arc surface as the groove side wall of the avoidance groove 119. When the foldable terminal is in a folded state, the first auxiliary member 16 and the second auxiliary member 17 may avoid an R angle formed when the foldable part of the display screen is bent, thereby reducing impact of a rotation mechanism on the display screen.

## Claims

1. A rotation mechanism, comprising a fixed base (11), a first swing arm (12), a second swing arm (13), a first limiting member (14), a second limiting member (15), and the fixed base (11) is provided with a first sliding groove (111) and a second sliding groove (112);
the first swing arm (12) comprises a first rotation shaft part (121), the first rotation shaft part (121) is installed in the first sliding groove (111), and may rotate relative to the fixed base (11), the first rotation shaft part (121) is provided with a first sliding hole (122), and the first sliding hole (122) runs through the first rotation shaft part (121) in a thickness direction of the first rotation shaft part (121);
the second swing arm (13) comprises a second rotation shaft part (131), the second rotation shaft part (131) is installed in the second sliding groove (112), and may rotate relative to the fixed base (11), the second rotation shaft part (131) is provided with a second sliding hole (132), the second sliding hole (132) runs through the second rotation shaft part (131) in a thickness direction of the second rotation shaft part (131), and rotation directions of the first rotation shaft part (121) and the second rotation shaft part (131) are opposite relative to the fixed base (11) when the first swing arm (12) and the second swing arm (13) are folded relatively or when the first swing arm (12) and the second swing arm (13) are unfolded relatively;
the first limiting member (14) is disposed in the first sliding hole (122), and is fixedly connected to the fixed base (11), and when the first rotation shaft part (121) rotates relative to the fixed base (11), the first limiting member (14) slides along the first sliding hole (122) relative to the first rotation shaft part (121); and
the second limiting member (15) is disposed in the second sliding hole (132), and is fixedly connected to the fixed base (11), and when the second rotation shaft part (131) rotates relative to the fixed base (11), the second limiting member (15) slides along the second sliding hole (132) relative to the second rotation shaft part (131),
wherein the first swing arm (12) further comprises a first swing part (123) fixedly connected to the first rotation shaft part (121), the first swing part (123) projects relative to the first sliding groove (111), and a top surface of the first limiting member (14) is located between a top surface of the first swing part (123) and a top surface of the first rotation shaft part (121); and
the second swing arm (13) further comprises a second swing part (133) fixedly connected to the second rotation shaft part (131), the second swing part (133) projects relative to the second sliding groove (112), and a top surface of the second limiting member (15) is located between a top surface of the second swing part (133) and a top surface of the second rotation shaft part (131),
**characterized in that** the fixed base (11) comprises a first fixing hole (11a) and a second fixing hole (11b), an opening of the first fixing hole (11a) is located on a groove bottom wall of the first sliding groove (111), and an opening of the second fixing hole (11b) is located on a groove bottom wall of the second sliding groove (112),
the first limiting member (14) includes a first fixing part (141), a first sliding part (142), and a first limiting member part (143) that are connected in sequence and integrally formed, wherein the first fixing part (141) is located in the first fixing hole (11a) and is fixed to a hole wall of the first fixing hole (11a), the first sliding part (142) is located in the first sliding hole (122), a top surface of the first limiting member part (143) is exposed relative to the first rotation shaft part (121), and a bottom surface of the first limiting member part (143) is clamped on a top surface of the first rotation shaft part (121),
the second limiting member (15) includes a second fixing part, a second sliding part, and a second limiting member part that are connected in sequence and integrally formed, wherein the second fixing part is located in the second fixing hole (11b) and is fixed to a hole wall of the second fixing hole (11b), the second sliding part is located in the second sliding hole (132), a top surface of the second limiting member part is exposed relative to the second rotation shaft part (131), and a bottom surface of the second limiting member part is clamped on a top surface of the second rotation shaft part (131).

2. The rotation mechanism according to claim 1, wherein the rotation mechanism further comprises a first support plate (20) and a second support plate (30), the first support plate (20) is fixedly connected to the first swing part, and the second support plate (30) is fixedly connected to the second swing part.

3. The rotation mechanism according to claim 2, wherein when the rotation mechanism is in a flattened state, a top surface of the first support plate and a top surface of the second support plate form a support surface.

4. The rotation mechanism according to claim 2 or 3, wherein when the rotation mechanism is in a folded state, the first support plate, the second support plate, and the fixed base are surrounded to form an avoidance space (1302).

5. The rotation mechanism according to any one of claims 2 to 4, wherein a first avoidance hole (23) is disposed on the first support plate, and the first avoidance hole (23) runs through the first support plate in a thickness direction of the first support plate, so as to avoid the first limiting member; and
a second avoidance hole (33) is disposed on the second support plate, and the second avoidance hole (33) runs through the second support plate in a thickness direction of the second support plate, so as to avoid the second limiting member.

6. The rotation mechanism according to any one of claims 2 to 5, wherein when the rotation mechanism is in a flattened state, the first rotation shaft part and the second rotation shaft part are arranged in an X-axis direction.

7. The rotation mechanism according to claim 6, wherein a first protrusion (21) and a first notch (22) are disposed on the first support plate, the first protrusion (21) is connected to a surface of the first support plate facing the second support plate, a projection of the first protrusion (21) on the first swing arm is located in the first rotation shaft part, an opening of the first notch (22) is located on the surface of the first support plate facing the second support plate, and a projection of the opening of the first notch (22) on the second swing arm is located in the second rotation shaft part;
the second support plate is provided with a second protrusion (31) and a second notch (32), the second protrusion (31) is connected to a surface of the second support plate facing the first support plate, a projection of the second protrusion (31) on the second swing arm is located in the second rotation shaft part, an opening of the second notch (32) is located on the surface of the second support plate facing the first support plate, and a projection of the second notch (32) on the first swing arm is located in the first rotation shaft part; and
when the rotation mechanism is in a flattened state, the first protrusion (21) is engaged with the second notch (32), and the second protrusion (31) is engaged with the first notch (22).

8. The rotation mechanism according to any one of claims 1 to 7, wherein the rotation mechanism further comprises a first auxiliary member (16) and a second auxiliary member (17), the first auxiliary member (16) is located on a side of the first rotation shaft part that faces away from a groove bottom wall of the first sliding groove, is fixedly connected to the fixed base, a first limiting hole (161) connected to the first sliding groove is disposed in the first auxiliary member (16), and the first limiting member is further disposed in the first limiting hole (161); and
the second auxiliary member (17) is located on a side of the second rotation shaft part that faces away from a groove bottom wall of the second sliding groove, and is fixed to the fixed base, the second auxiliary member (17) is provided with a second limiting hole (171) connected to the second sliding groove, and the second limiting member is further disposed in the second limiting hole (171).

9. The rotation mechanism according to any one of claims 1 to 8, wherein the rotation mechanism comprises two rotation components (10), the two rotation components (10) are arranged at intervals in a Y-axis direction, and each of the rotation components (10) comprises the fixed base, the first swing arm, the second swing arm, the first limiting member, and the second limiting member.

10. A foldable terminal (1000), comprising a first housing (110), a second housing (120), and the rotation mechanism according to any one of claims 1 to 9, wherein the first housing (110) is fixedly connected to the first swing arm, and the second housing (120) is fixedly connected to the second swing arm.

11. The foldable terminal according to claim 10, wherein the foldable terminal further comprises a display screen (200), the display screen (200) comprises a first display part (210), a second display part (220), and a foldable part (230), the foldable part (230) is connected between the first display part (210) and the second display part (220), the first display part (210) is installed in the first housing, the second display part (220) is installed in the second housing, and the foldable part (230) is disposed opposite to the rotation mechanism.

## Patentansprüche

1. Ein Rotationsmechanismus, umfassend eine feste Basis (11), einen ersten Schwenkarm (12), einen zweiten Schwenkarm (13), ein erstes Begrenzungselement (14), ein zweites Begrenzungselement (15), wobei die feste Basis (11) mit einer ersten Gleitnut (111) und einer zweiten Gleitnut (112) versehen ist;
der erste Schwenkarm (12) umfasst einen ersten Rotationswellenabschnitt (121), der erste Rotationswellenabschnitt (121) ist in der ersten Gleitnut (111) installiert und kann sich relativ zur festen Basis (11) drehen, der erste Rotationswellenabschnitt (121) ist mit einem ersten Gleitloch (122) versehen, und das erste Gleitloch (122) durchdringt den ersten Rotationswellenabschnitt (121) in einer Dicke des ersten Rotationswellenabschnitts (121);
der zweite Schwenkarm (13) umfasst einen zweiten Rotationswellenabschnitt (131), der zweite Rotationswellenabschnitt (131) ist in der zweiten Gleitnut (112) installiert und kann sich relativ zur festen Basis (11) drehen, der zweite Rotationswellenabschnitt (131) ist mit einem zweiten Gleitloch (132) versehen, das zweite Gleitloch (132) durchdringt den zweiten Rotationswellenabschnitt (131) in einer Dicke des zweiten Rotationswellenabschnitts (131), und die Rotationsrichtungen des ersten Rotationswellenabschnitts (121) und des zweiten Rotationswellenabschnitts (131) sind relativ zur festen Basis (11) entgegengesetzt, wenn der erste Schwenkarm (12) und der zweite Schwenkarm (13) relativ zueinander gefaltet oder entfaltet werden;
das erste Begrenzungselement (14) ist im ersten Gleitloch (122) angeordnet und fest mit der festen Basis (11) verbunden, und wenn sich der erste Rotationswellenabschnitt (121) relativ zur festen Basis (11) dreht, gleitet das erste Begrenzungselement (14) relativ zum ersten Rotationswellenabschnitt (121) entlang des ersten Gleitlochs (122); und
das zweite Begrenzungselement (15) ist im zweiten Gleitloch (132) angeordnet und fest mit der festen Basis (11) verbunden, und wenn sich der zweite Rotationswellenabschnitt (131) relativ zur festen Basis (11) dreht, gleitet das zweite Begrenzungselement (15) relativ zum zweiten Rotationswellenabschnitt (131) entlang des zweiten Gleitlochs (132),
wobei der erste Schwenkarm (12) ferner einen ersten Schwenkabschnitt (123) umfasst, der fest mit dem ersten Rotationswellenabschnitt (121) verbunden ist, der erste Schwenkabschnitt (123) ragt relativ zur ersten Gleitnut (111) hervor, und eine Oberseite des ersten Begrenzungselements (14) befindet sich zwischen einer Oberseite des ersten Schwenkabschnitts (123) und einer Oberseite des ersten Rotationswellenabschnitts (121); und
Der zweite Schwenkarm (13) umfasst weiterhin einen zweiten Schwenkteil (133), der fest mit dem zweiten Rotationswellenabschnitt (131) verbunden ist. Der zweite Schwenkteil (133) ragt relativ zur zweiten Gleitrille (112) hervor, und eine Oberseite des zweiten Begrenzungselements (15) befindet sich zwischen einer Oberseite des zweiten Schwenkteils (133) und einer Oberseite des zweiten Rotationswellenabschnitts (131),
**Dadurch gekennzeichnet, dass** die feste Basis (11) ein erstes Befestigungsloch (11a) und ein zweites Befestigungsloch (11b) umfasst, wobei eine Öffnung des ersten Befestigungslochs (11a) sich an einer Rillenbodenwand der ersten Gleitrille (111) befindet und eine Öffnung des zweiten Befestigungslochs (11b) sich an einer Rillenbodenwand der zweiten Gleitrille (112) befindet,
Das erste Begrenzungselement (14) umfasst einen ersten Befestigungsteil (141), einen ersten Gleitteil (142) und einen ersten Begrenzungselementteil (143), die nacheinander verbunden und integral geformt sind, wobei der erste Befestigungsteil (141) sich im ersten Befestigungsloch (11a) befindet und an einer Lochwand des ersten Befestigungslochs (11a) befestigt ist. Der erste Gleitteil (142) befindet sich im ersten Gleitloch (122), eine Oberseite des ersten Begrenzungselementteils (143) ist relativ zum ersten Rotationswellenabschnitt (121) freigelegt, und eine Unterseite des ersten Begrenzungselementteils (143) ist an einer Oberseite des ersten Rotationswellenabschnitts (121) geklemmt,
Das zweite Begrenzungselement (15) umfasst einen zweiten Befestigungsteil, einen zweiten Gleitteil und einen zweiten Begrenzungselementteil, die nacheinander verbunden und integral geformt sind, wobei der zweite Befestigungsteil sich im zweiten Befestigungsloch (11b) befindet und an einer Lochwand des zweiten Befestigungslochs (11b) befestigt ist. Der zweite Gleitteil befindet sich im zweiten Gleitloch (132), eine Oberseite des zweiten Begrenzungselementteils ist relativ zum zweiten Rotationswellenabschnitt (131) freigelegt, und eine Unterseite des zweiten Begrenzungselementteils ist an einer Oberseite des zweiten Rotationswellenabschnitts (131) geklemmt.

2. Der Rotationsmechanismus gemäß Anspruch 1, wobei der Rotationsmechanismus weiterhin eine erste Stützplatte (20) und eine zweite Stützplatte (30) umfasst, wobei die erste Stützplatte (20) fest mit dem ersten Schwenkteil verbunden ist und die zweite Stützplatte (30) fest mit dem zweiten Schwenkteil verbunden ist.

3. Der Rotationsmechanismus gemäß Anspruch 2, wobei, wenn sich der Rotationsmechanismus in einem abgeflachten Zustand befindet, eine Oberseite der ersten Stützplatte und eine Oberseite der zweiten Stützplatte eine Stützfläche bilden.

4. Der Rotationsmechanismus gemäß Anspruch 2 oder 3, wobei, wenn sich der Rotationsmechanismus in einem gefalteten Zustand befindet, die erste Stützplatte, die zweite Stützplatte und die feste Basis umgeben sind, um einen Ausweichraum (1302) zu bilden.

5. Der Rotationsmechanismus gemäß einem der Ansprüche 2 bis 4, wobei ein erstes Ausweichloch (23) auf der ersten Trägerplatte angeordnet ist, und das erste Ausweichloch (23) durch die erste Trägerplatte in einer Dickenrichtung der ersten Trägerplatte verläuft, um das erste Begrenzungselement zu vermeiden; und
Ein zweites Ausweichloch (33) ist auf der zweiten Trägerplatte angeordnet, und das zweite Ausweichloch (33) verläuft durch die zweite Trägerplatte in einer Dickenrichtung der zweiten Trägerplatte, um das zweite Begrenzungselement zu vermeiden.

6. Der Rotationsmechanismus gemäß einem der Ansprüche 2 bis 5, wobei, wenn der Rotationsmechanismus in einem abgeflachten Zustand ist, der erste Rotationswellenabschnitt und der zweite Rotationswellenabschnitt in einer X-Achsen-Richtung angeordnet sind.

7. Der Rotationsmechanismus gemäß Anspruch 6, wobei ein erster Vorsprung (21) und eine erste Kerbe (22) auf der ersten Trägerplatte angeordnet sind, der erste Vorsprung (21) mit einer Oberfläche der ersten Trägerplatte verbunden ist, die der zweiten Trägerplatte zugewandt ist, eine Projektion des ersten Vorsprungs (21) auf dem ersten Schwenkarm im ersten Rotationswellenabschnitt liegt, eine Öffnung der ersten Kerbe (22) auf der Oberfläche der ersten Trägerplatte liegt, die der zweiten Trägerplatte zugewandt ist, und eine Projektion der Öffnung der ersten Kerbe (22) auf dem zweiten Schwenkarm im zweiten Rotationswellenabschnitt liegt;
Die zweite Trägerplatte ist mit einem zweiten Vorsprung (31) und einer zweiten Kerbe (32) versehen, der zweite Vorsprung (31) ist mit einer Oberfläche der zweiten Trägerplatte verbunden, die der ersten Trägerplatte zugewandt ist, eine Projektion des zweiten Vorsprungs (31) auf dem zweiten Schwenkarm im zweiten Rotationswellenabschnitt liegt, eine Öffnung der zweiten Kerbe (32) auf der Oberfläche der zweiten Trägerplatte liegt, die der ersten Trägerplatte zugewandt ist, und eine Projektion der zweiten Kerbe (32) auf dem ersten Schwenkarm im ersten Rotationswellenabschnitt liegt; und
Wenn der Rotationsmechanismus in einem abgeflachten Zustand ist, ist der erste Vorsprung (21) mit der zweiten Kerbe (32) verbunden, und der zweite Vorsprung (31) ist mit der ersten Kerbe (22) verbunden.

8. Der Rotationsmechanismus gemäß einem der Ansprüche 1 bis 7, wobei der Rotationsmechanismus ferner ein erstes Hilfselement (16) und ein zweites Hilfselement (17) umfasst, das erste Hilfselement (16) auf einer Seite des ersten Rotationswellenabschnitts liegt, die von einer Nutbodenwand der ersten Gleitnut abgewandt ist, fest mit der festen Basis verbunden ist, ein erstes Begrenzungsloch (161), das mit der ersten Gleitnut verbunden ist, im ersten Hilfselement (16) angeordnet ist, und das erste Begrenzungselement ferner im ersten Begrenzungsloch (161) angeordnet ist; und
Das zweite Hilfselement (17) befindet sich auf einer Seite des zweiten Rotationswellenabschnitts, die von einer Nutbodenwand der zweiten Gleitnut wegzeigt, und ist an der festen Basis befestigt. Das zweite Hilfselement (17) ist mit einem zweiten Begrenzungsloch (171) versehen, das mit der zweiten Gleitnut verbunden ist, und das zweite Begrenzungselement ist weiterhin im zweiten Begrenzungsloch (171) angeordnet.

9. Der Rotationsmechanismus gemäß einem der Ansprüche 1 bis 8, wobei der Rotationsmechanismus zwei Rotationskomponenten (10) umfasst, die beiden Rotationskomponenten (10) sind in Y-Achsen-Richtung in Abständen angeordnet, und jede der Rotationskomponenten (10) umfasst die feste Basis, den ersten Schwenkarm, den zweiten Schwenkarm, das erste Begrenzungselement und das zweite Begrenzungselement.

10. Ein faltbares Endgerät (1000), umfassend ein erstes Gehäuse (110), ein zweites Gehäuse (120) und den Rotationsmechanismus gemäß einem der Ansprüche 1 bis 9, wobei das erste Gehäuse (110) fest mit dem ersten Schwenkarm verbunden ist und das zweite Gehäuse (120) fest mit dem zweiten Schwenkarm verbunden ist.

11. Das faltbare Endgerät gemäß Anspruch 10, wobei das faltbare Endgerät weiterhin einen Bildschirm (200) umfasst, der Bildschirm (200) umfasst einen ersten Bildschirmabschnitt (210), einen zweiten Bildschirmabschnitt (220) und einen faltbaren Abschnitt (230). Der faltbare Abschnitt (230) ist zwischen dem ersten Bildschirmabschnitt (210) und dem zweiten Bildschirmabschnitt (220) verbunden, der erste Bildschirmabschnitt (210) ist im ersten Gehäuse installiert, der zweite Bildschirmabschnitt (220) ist im zweiten Gehäuse installiert, und der faltbare Abschnitt (230) ist gegenüber dem Rotationsmechanismus angeordnet.

## Revendications

1. Un mécanisme de rotation, comprenant une base fixe (11), un premier bras oscillant (12), un deuxième bras oscillant (13), un premier élément de limitation (14), un deuxième élément de limitation (15), et la base fixe (11) est pourvue d'une première rainure coulissante (111) et d'une deuxième rainure coulissante (112);
le premier bras oscillant (12) comprend une première partie d'arbre de rotation (121), la première partie d'arbre de rotation (121) est installée dans la première rainure coulissante (111), et peut tourner par rapport à la base fixe (11), la première partie d'arbre de rotation (121) est pourvue d'un premier trou coulissant (122), et le premier trou coulissant (122) traverse la première partie d'arbre de rotation (121) dans une direction d'épaisseur de la première partie d'arbre de rotation (121);
le deuxième bras oscillant (13) comprend une deuxième partie d'arbre de rotation (131), la deuxième partie d'arbre de rotation (131) est installée dans la deuxième rainure coulissante (112), et peut tourner par rapport à la base fixe (11), la deuxième partie d'arbre de rotation (131) est pourvue d'un deuxième trou coulissant (132), le deuxième trou coulissant (132) traverse la deuxième partie d'arbre de rotation (131) dans une direction d'épaisseur de la deuxième partie d'arbre de rotation (131), et les directions de rotation de la première partie d'arbre de rotation (121) et de la deuxième partie d'arbre de rotation (131) sont opposées par rapport à la base fixe (11) lorsque le premier bras oscillant (12) et le deuxième bras oscillant (13) sont pliés relativement ou lorsque le premier bras oscillant (12) et le deuxième bras oscillant (13) sont dépliés relativement;
le premier élément de limitation (14) est disposé dans le premier trou coulissant (122), et est fixé à la base fixe (11), et lorsque la première partie d'arbre de rotation (121) tourne par rapport à la base fixe (11), le premier élément de limitation (14) glisse le long du premier trou coulissant (122) par rapport à la première partie d'arbre de rotation (121); et
le deuxième élément de limitation (15) est disposé dans le deuxième trou coulissant (132), et est fixé à la base fixe (11), et lorsque la deuxième partie d'arbre de rotation (131) tourne par rapport à la base fixe (11), le deuxième élément de limitation (15) glisse le long du deuxième trou coulissant (132) par rapport à la deuxième partie d'arbre de rotation (131),
dans lequel le premier bras oscillant (12) comprend en outre une première partie oscillante (123) fixée à la première partie d'arbre de rotation (121), la première partie oscillante (123) dépasse par rapport à la première rainure coulissante (111), et une surface supérieure du premier élément de limitation (14) est située entre une surface supérieure de la première partie oscillante (123) et une surface supérieure de la première partie d'arbre de rotation (121); et
le deuxième bras oscillant (13) comprend en outre une deuxième partie oscillante (133) fixée de manière solidaire à la deuxième partie d'arbre de rotation (131), la deuxième partie oscillante (133) dépasse par rapport à la deuxième rainure coulissante (112), et une surface supérieure du deuxième élément de limitation (15) est située entre une surface supérieure de la deuxième partie oscillante (133) et une surface supérieure de la deuxième partie d'arbre de rotation (131),
**caractérisé en ce que** la base fixe (11) comprend un premier trou de fixation (11a) et un deuxième trou de fixation (11b), une ouverture du premier trou de fixation (11a) est située sur une paroi inférieure de rainure de la première rainure coulissante (111), et une ouverture du deuxième trou de fixation (11b) est située sur une paroi inférieure de rainure de la deuxième rainure coulissante (112),
le premier élément de limitation (14) comprend une première partie de fixation (141), une première partie coulissante (142) et une première partie d'élément de limitation (143) qui sont connectées en séquence et formées intégralement, où la première partie de fixation (141) est située dans le premier trou de fixation (11a) et est fixée à une paroi du trou du premier trou de fixation (11a), la première partie coulissante (142) est située dans le premier trou coulissant (122), une surface supérieure de la première partie d'élément de limitation (143) est exposée par rapport à la première partie d'arbre de rotation (121), et une surface inférieure de la première partie d'élément de limitation (143) est fixée sur une surface supérieure de la première partie d'arbre de rotation (121),
le deuxième élément de limitation (15) comprend une deuxième partie de fixation, une deuxième partie coulissante et une deuxième partie d'élément de limitation qui sont connectées en séquence et formées intégralement, où la deuxième partie de fixation est située dans le deuxième trou de fixation (11b) et est fixée à une paroi du trou du deuxième trou de fixation (11b), la deuxième partie coulissante est située dans le deuxième trou coulissant (132), une surface supérieure de la deuxième partie d'élément de limitation est exposée par rapport à la deuxième partie d'arbre de rotation (131), et une surface inférieure de la deuxième partie d'élément de limitation est fixée sur une surface supérieure de la deuxième partie d'arbre de rotation (131).

2. Le mécanisme de rotation selon la revendication 1, dans lequel le mécanisme de rotation comprend en outre une première plaque de support (20) et une deuxième plaque de support (30), la première plaque de support (20) est fixée de manière solidaire à la première partie oscillante, et la deuxième plaque de support (30) est fixée de manière solidaire à la deuxième partie oscillante.

3. Le mécanisme de rotation selon la revendication 2, dans lequel, lorsque le mécanisme de rotation est dans un état aplati, une surface supérieure de la première plaque de support et une surface supérieure de la deuxième plaque de support forment une surface de support.

4. Le mécanisme de rotation selon la revendication 2 ou 3, dans lequel, lorsque le mécanisme de rotation est dans un état plié, la première plaque de support, la deuxième plaque de support et la base fixe sont entourées pour former un espace d'évitement (1302).

5. Le mécanisme de rotation selon l'une quelconque des revendications 2 à 4, dans lequel un premier trou d'évitement (23) est disposé sur la première plaque de support, et le premier trou d'évitement (23) traverse la première plaque de support dans une direction d'épaisseur de la première plaque de support, afin d'éviter le premier élément de limitation; et
un deuxième trou d'évitement (33) est disposé sur la deuxième plaque de support, et le deuxième trou d'évitement (33) traverse la deuxième plaque de support dans une direction d'épaisseur de la deuxième plaque de support, afin d'éviter le deuxième élément de limitation.

6. Le mécanisme de rotation selon l'une quelconque des revendications 2 à 5, dans lequel, lorsque le mécanisme de rotation est dans un état aplati, la première partie de l'arbre de rotation et la deuxième partie de l'arbre de rotation sont disposées dans une direction de l'axe X.

7. Le mécanisme de rotation selon la revendication 6, dans lequel une première saillie (21) et une première encoche (22) sont disposées sur la première plaque de support, la première saillie (21) est connectée à une surface de la première plaque de support faisant face à la deuxième plaque de support, une projection de la première saillie (21) sur le premier bras oscillant est située dans la première partie de l'arbre de rotation, une ouverture de la première encoche (22) est située sur la surface de la première plaque de support faisant face à la deuxième plaque de support, et une projection de l'ouverture de la première encoche (22) sur le deuxième bras oscillant est située dans la deuxième partie de l'arbre de rotation ;
la deuxième plaque de support est pourvue d'une deuxième saillie (31) et d'une deuxième encoche (32), la deuxième saillie (31) est connectée à une surface de la deuxième plaque de support faisant face à la première plaque de support, une projection de la deuxième saillie (31) sur le deuxième bras oscillant est située dans la deuxième partie de l'arbre de rotation, une ouverture de la deuxième encoche (32) est située sur la surface de la deuxième plaque de support faisant face à la première plaque de support, et une projection de la deuxième encoche (32) sur le premier bras oscillant est située dans la première partie de l'arbre de rotation ; et
lorsque le mécanisme de rotation est dans un état aplati, la première saillie (21) est engagée avec la deuxième encoche (32), et la deuxième saillie (31) est engagée avec la première encoche (22).

8. Le mécanisme de rotation selon l'une quelconque des revendications 1 à 7, dans lequel le mécanisme de rotation comprend en outre un premier élément auxiliaire (16) et un deuxième élément auxiliaire (17), le premier élément auxiliaire (16) est situé sur un côté de la première partie de l'arbre de rotation qui fait face à l'écart du mur inférieur de la rainure coulissante, est connecté de manière fixe à la base fixe, un premier trou de limitation (161) connecté à la rainure coulissante est disposé dans le premier élément auxiliaire (16), et le premier élément de limitation est en outre disposé dans le premier trou de limitation (161) ; et
le deuxième élément auxiliaire (17) est situé sur un côté de la partie de l'arbre de rotation secondaire qui fait face à l'opposé d'une paroi inférieure de rainure de la deuxième rainure coulissante, et est fixé à la base fixe, le deuxième élément auxiliaire (17) est pourvu d'un deuxième trou de limitation (171) connecté à la deuxième rainure coulissante, et le deuxième élément de limitation est en outre disposé dans le deuxième trou de limitation (171).

9. Le mécanisme de rotation selon l'une quelconque des revendications 1 à 8, dans lequel le mécanisme de rotation comprend deux composants de rotation (10), les deux composants de rotation (10) sont disposés à intervalles dans une direction de l'axe Y, et chacun des composants de rotation (10) comprend la base fixe, le premier bras oscillant, le deuxième bras oscillant, le premier élément de limitation et le deuxième élément de limitation.

10. Un terminal pliable (1000), comprenant un premier boîtier (110), un deuxième boîtier (120) et le mécanisme de rotation selon l'une quelconque des revendications 1 à 9, dans lequel le premier boîtier (110) est fixé de manière fixe au premier bras oscillant, et le deuxième boîtier (120) est fixé de manière fixe au deuxième bras oscillant.

11. Le terminal pliable selon la revendication 10, dans lequel le terminal pliable comprend en outre un écran d'affichage (200), l'écran d'affichage (200) comprend une première partie d'affichage (210), une deuxième partie d'affichage (220) et une partie pliable (230), la partie pliable (230) est connectée entre la première partie d'affichage (210) et la deuxième partie d'affichage (220), la première partie d'affichage (210) est installée dans le premier boîtier, la deuxième partie d'affichage (220) est installée dans le deuxième boîtier, et la partie pliable (230) est disposée en face du mécanisme de rotation.
